(19) Europäisches Patentamt / European Patent Office / Office européen des brevets

(11) **EP 4 219 993 A1**

(12) **EUROPÄISCHE PATENTANMELDUNG**

(43) Veröffentlichungstag:
**02.08.2023 Patentblatt 2023/31**

(21) Anmeldenummer: **22154015.6**

(22) Anmeldetag: **28.01.2022**

(51) Internationale Patentklassifikation (IPC):
**F16K 37/00** (2006.01)    **F16K 51/00** (2006.01)
**F16L 55/00** (2006.01)    **F17D 5/06** (2006.01)
**G01M 3/24** (2006.01)    **G01N 29/04** (2006.01)
**G01N 29/44** (2006.01)

(52) Gemeinsame Patentklassifikation (CPC):
**G01N 29/14; F16K 37/00; F16K 51/00;
G01M 3/243; G01N 29/04; G01N 29/4409;**
F17D 5/06; G01N 2291/0289

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Senseven GmbH
1140 Wien (AT)**

(72) Erfinder:
• **HETTEGGER, Michael
1140 Wien (AT)**
• **ALTMANN, Christoph
1110 Wien (AT)**

(74) Vertreter: **Keller Schneider
Patentanwaltsgesellschaft mbH
Linprunstraße 10
80335 München (DE)**

(54) **VERFAHREN ZUM ERSTELLEN EINER DIAGNOSE EINES BAUTEILS MITTELS SCHALLEMISSION**

(57) Die Erfindung betrifft ein Verfahren zum Erstellen einer Diagnose eines Bauteils (100), insbesondere eines Ventils, mittels Schallemissionsprüfung, welches Bauteil (100) eingebaut ist in eine Rohrleitung (200), welche Rohrleitung (200) zum Leiten eines Fluids entlang einem Flussweg in eine Flussleitrichtung (201) ausgebildet ist, wobei die Diagnose des Bauteils (100) unter Berücksichtigung eines ersten Schallemissionssensorsignals und eines zweiten Schallemissionssensorsignals erstellt wird, wobei für das Erstellen der Diagnose ein Unterscheidungsmerkmal zwischen dem ersten Schallemissionssensorsignal und dem zweiten Schallemissionssensorsignal mitberücksichtigt wird, wobei das erste Schallemissionssensorsignal von einem von wenigstens einem Schallemissionssensor (2.1, 2.2) ausgegeben worden ist. Dabei ist mit dem jeweiligen von wenigstens einem Schallemissionssensor (2.1, 2.2) an einer ersten Position (51) auf der Rohrleitung ein erstes Schallemissionssignal erfasst worden, wobei das vom jeweiligen von wenigstens einem Schallemissionssensor (2.1, 2.2) ausgegebene erste Schallemissionssensorsignal dem erfassten ersten Schallemissionssignal entspricht, wobei sich die erste Position (51) in die Flussleitrichtung (201) gesehen auf einer Höhe des in die Rohrleitung (200) eingebauten Bauteils (100) befindet. Weiter ist das zweite Schallemissionssensorsignal von einem vom wenigstens einen Schallemissionssensor (2.1, 2.2) ausgegeben worden, wobei mit dem jeweiligen von wenigstens einem Schallemissionssensor (2.1, 2.2) an einer zweiten Position (52) auf der Rohrleitung (200) ein zweites Schallemissionssignal erfasst worden ist, wobei das vom jeweiligen von wenigstens einem Schallemissionssensor (2.1, 2.2) ausgegebene zweite Schallemissionssensorsignal dem erfassten zweiten Schallemissionssignal entspricht, wobei sich die zweite Position (52) von der ersten Position (51) in die Flussleitrichtung (201) oder entgegen der Flussleitrichtung (201) von der ersten Position (51) beabstandet auf der Rohrleitung (200) befindet.

**Fig. 1**

**Beschreibung**

**Technisches Gebiet**

Die Erfindung betrifft ein Verfahren zum Erstellen einer Diagnose eines Bauteils, insbesondere eines Ventils, mittels Schallemissionsprüfung, welches Bauteil eingebaut ist in eine Rohrleitung, welche Rohrleitung zum Leiten eines Fluids entlang einem Flussweg in eine Flussleitrichtung ausgebildet ist, sowie ein Computerprogrammprodukt zur Durchführung dieses Verfahrens. Weiter betrifft die Erfindung ein Verfahren zur Diagnose eines Bauteils, insbesondere eines Ventils, mittels Schallemissionsprüfung, welches Bauteil eingebaut ist in eine Rohrleitung, welche Rohrleitung zum Leiten eines Fluids entlang einem Flussweg in eine Flussleitrichtung ausgebildet ist, sowie eine Anordnung zur Durchführung dieses Verfahrens.

**Stand der Technik**

Verfahren, Computerprogrammprodukte sowie Anordnungen, welche zum eingangs genannten technischen Gebiet gehören, sind bekannt. Beispielsweise beschreibt die WO 2014/105839 A1 der Score Group PLC ein Verfahren zum akustischen Bestimmen von Leckageraten eines Ventils, wobei Schallemissionssensoren radial um das Ventil herum angeordnet werden, um Schallemissionssignale, welche durch die Leckage des Ventils verursacht werden, zu detektieren. Dabei erfolgt das Bestimmen der Leckagerate und damit das Erstellen der Diagnose des jeweiligen Ventils durch eine Auswertung der mit den Schallemissionssensoren erfassten Schallemissionssignale mittels einem Computerprogrammprodukt.

Der Nachteil dieser bekannten Verfahren, Computerprogrammprodukte sowie Anordnungen ist, dass sie nur das Erstellen einer unzureichend genauen und unzureichend zuverlässigen Diagnose bzw. eine unzureichend genaue und unzureichend zuverlässige Diagnose des Ventils ermöglichen.

**Darstellung der Erfindung**

Aufgabe der Erfindung ist es, ein dem eingangs genannten technischen Gebiet zugehörendes Verfahren zum Erstellen einer Diagnose eines Bauteils, insbesondere eines Ventils, welches Bauteil eingebaut ist in eine Rohrleitung, welche Rohrleitung zum Leiten eines Fluids entlang einem Flussweg in eine Flussleitrichtung ausgebildet ist, mittels Schallemissionsprüfung zu schaffen, welches Verfahren das Erstellen einer genaueren und zuverlässigeren Diagnose des Bauteils ermöglicht. Weiter ist es die Aufgabe der Erfindung, ein Computerprogrammprodukt zur Durchführung dieses Verfahrens zu schaffen, welches das Erstellen einer genaueren und zuverlässigeren Diagnose des Bauteils ermöglicht. Ausserdem ist es die Aufgabe der Erfindung, ein Verfahren zur Diagnose eines Bauteils, insbesondere eines Ventils, welches Bauteil eingebaut ist in eine Rohrleitung, welche Rohrleitung zum Leiten eines Fluids entlang einem Flussweg in eine Flussleitrichtung ausgebildet ist, mittels Schallemissionsprüfung zu schaffen und eine Anordnung zur Durchführung des Verfahren zur Diagnose des Bauteils, insbesondere Ventils, mittels Schallemissionsprüfung zu schaffen, welches eine genauere und zuverlässigere Diagnose des Ventils ermöglichen.

Die Lösung der Aufgabe ist durch die Merkmale des Anspruchs 1 definiert. Gemäss der Erfindung wird die Diagnose des Bauteils unter Berücksichtigung eines ersten Schallemissionssensorsignals und eines zweiten Schallemissionssensorsignals erstellt, wobei für das Erstellen der Diagnose ein Unterscheidungsmerkmal zwischen dem ersten Schallemissionssensorsignal und dem zweiten Schallemissionssensorsignal mitberücksichtigt wird, wobei das erste Schallemissionssensorsignal von einem von wenigstens einem Schallemissionssensor ausgegeben worden ist, wobei mit dem jeweiligen von wenigstens einem Schallemissionssensor an einer ersten Position auf der Rohrleitung, insbesondere aussen auf der Rohrleitung, ein erstes Schallemissionssignal erfasst worden ist, wobei das vom jeweiligen von wenigstens einem Schallemissionssensor ausgegebene erste Schallemissionssensorsignal dem erfassten ersten Schallemissionssignal entspricht, wobei sich die erste Position in die Flussleitrichtung gesehen auf einer Höhe des in die Rohrleitung eingebauten Bauteils befindet, wobei das zweite Schallemissionssensorsignal von einem vom wenigstens einen Schallemissionssensor ausgegeben worden ist, wobei mit dem jeweiligen von wenigstens einem Schallemissionssensor an einer zweiten Position auf der Rohrleitung, insbesondere aussen auf der Rohrleitung, ein zweites Schallemissionssignal erfasst worden ist, wobei das vom jeweiligen von wenigstens einem Schallemissionssensor ausgegebene zweite Schallemissionssensorsignal dem erfassten zweiten Schallemissionssignal entspricht, wobei sich die zweite Position von der ersten Position in die Flussleitrichtung oder entgegen der Flussleitrichtung von der ersten Position beabstandet auf der Rohrleitung, insbesondere aussen auf der Rohrleitung, befindet.

Vorzugsweise ist ein Computerprogrammprodukt zur Durchführung des erfindungsgemässen Verfahrens zum Erstellen eine Diagnose eines Bauteils ausgebildet. Vorzugsweise ist eine Diagnoseeinheit zum Erstellen einer Diagnose eines Bauteils mit dem Verfahren zum Erstellen einer Diagnose eines Bauteils dazu eingerichtet, die Diagnose des Bauteils mit dem Verfahren zum Erstellen einer Diagnose eines Bauteils zu erstellen. Besonders bevorzugt ist die Diagnoseeinheit eine Rechnereinheit, auf welcher das Computerprogrammprodukt zur Durchführung des Verfahrens um Erstellen einer Diagnose eines Bauteils installiert ist.

Erfindungsgemäss ist das Bauteil eingebaut in eine Rohrleitung, welche Rohrleitung zum Leiten eines Fluids entlang einem Flussweg in eine Flussleitrichtung ausgebildet. Dabei kann das Bauteil beispielsweise ein Rohrstück, ein Verbindungsstück zum Verbinden von Rohrstücken, ein Ventil oder ein Kondensatabscheider sein. Da ein Kondensatabscheider mindestens ein Ventil aufweist, kann mit dem Verfahren auch eine Diagnose des mindestens einen Ventils des Kondensatabscheiders erstellt werden. Die Rohrleitung kann verschiedene Bauelemente wie Rohrstücke, Verbindungsstücke zum Verbinden von Rohrstücken, Ventile, Kondensatabscheider sowie Rohrstücke mit Sensoren beinhalten und aus diesen Bauelementen zusammengesetzt sein. Die Rohrleitung kann aber auch noch weitere Bauelemente beinhalten.

Wie bereits erwähnt, ist die Rohrleitung zum Leiten eines Fluids entlang einem Flussweg in eine Flussleitrichtung ausgebildet. Dabei kann das Fluid eine Flüssigkeit, ein Gas oder eine Mischung aus einer Flüssigkeit und einem Gas, wie zum Beispiel Wasserdampf, sein. Weiter ist der Flussweg vorzugsweise der Weg, entlang welchem das Fluid in der Rohrleitung geleitet wird. D.h. der Flussweg ist vorzugsweise durch den Verlauf der Rohrleitung vorgegeben.

Da das Bauteil, dessen Diagnose erstellt wird, eingebaut ist in eine Rohrleitung, erfolgt die Schallemissionsprüfung an der zusammengebauten Rohrleitung. Dies hat den Vorteil, dass eine nicht-invasive Diagnose des Bauteils im vollen Betrieb der Rohrleitung ermöglicht wird. Dies ist insbesondere in Produktionsanlagen vorteilhaft, in welchen für die Produktion Rohrleitungen benutzt werden. In solchen Produktionsanlagen kann somit mit der vorliegenden Erfindung für die Bauteile der Rohrleitungen eine Diagnose erstellt werden.

Die Diagnose des Bauteils beinhaltet vorzugsweise das Bestimmen eines Zustands des jeweiligen Bauteils. In einer bevorzugten Variante beinhaltet die Diagnose eines Bauteils das Bestimmen, ob das jeweilige Bauteil ein Leck aufweist oder nicht. In einer bevorzugten Variation davon beinhaltet die Diagnose eines Bauteils zudem das Bestimmen einer Leckagerate des jeweiligen Bauteils. Die Diagnose kann aber auch keine Bestimmung der Leckagerate beinhalten. In einer weiteren bevorzugten Variante beinhaltet die Diagnose eines Bauteils das Bestimmen, ob im Bauteil Kavitationen auftreten oder nicht. In einer Variation davon beinhaltet die Diagnose eines Bauteils zudem das Bestimmen einer Kavitationsrate des jeweiligen Bauteils. Die Diagnose kann aber auch keine Bestimmung der Kavitationsrate beinhalten.

Erfindungsgemäss wird für das Erstellen der Diagnose ein Unterscheidungsmerkmal zwischen dem ersten Schallemissionssensorsignal und dem zweiten Schallemissionssensorsignal mitberücksichtigt.

Das Unterscheidungsmerkmal kann beispielsweise ein Unterschied in der für die beiden erfassten Schallemeissionssignale über einen vorgegebenen Frequenzbereich gemittelten Intensität sein. Da die Schallemissionssensorsignale dem jeweiligen erfassten Schallemissionssignal entsprechen, kann beispielsweise die über den vorgegebenen Frequenzbereich gemittelte Intensität des ersten Schallemissionssensorsignals grösser als die über den vorgegebenen Frequenzbereich gemittelte Intensität des zweiten Schallemissionssensorsignals sein. Der vorgegebene Frequenzbereich kann dabei beispielsweise ein Teilbereich des vom wenigstens einen Schallemissionssensor erfassten Frequenzbereich sein oder den ganzen vom jeweiligen Schallemissionssensor erfassten Frequenzbereich abdecken.

Wie bereits erwähnt, ist das zweite Schallemissionssensorsignal von einem vom wenigstens einen Schallemissionssensor ausgegeben worden. Dabei kann das zweite Schallemissionssensorsignal vom gleichen Schallemissionssensor ausgegeben worden sein, mit welchem an der ersten Position auf der Rohrleitung das erste Schallemissionssignal erfasst wird oder das zweite Schallemissionssensorsignal kann von einem davon unterschiedlichen Schallemissionssensor ausgegeben worden sein.

Erfindungsgemäss erfolgt somit die Diagnose des Bauteils unter Berücksichtigung eines Unterscheidungsmerkmals zwischen von mindestens zwei Schallemissionssensorsignalen, welche Schallemissionssignalen entsprechen, die an unterschiedlichen Positionen entlang dem Flussweg auf der Rohrleitung erfasst wurden, wovon sich eine Position (die erste Position) in die Flussleitrichtung gesehen auf einer Höhe des in die Rohrleitung eingebauten Bauteils befindet. Dies hat den Vorteil, dass aufgrund des Zustands des Bauteils verursachte Geräusche von grundsätzlich in der Rohrleitung vorhandenen, durch andere Quellen und beispielsweise auch das Fluid verursachten Geräuschen zumindest teilweise unterschieden werden können, wodurch das Erstellen einer genaueren und zuverlässigeren Diagnose des Bauteils ermöglicht wird.

Vorteilhafterweise wird die Diagnose des Bauteils unter Berücksichtigung eines dritten Schallemissionssensorsignals erstellt, wobei das dritte Schallemissionssensorsignal von einem vom wenigstens einen Schallemissionssensor ausgegeben worden ist, wobei mit dem jeweiligen vom wenigstens einen Schallemissionssensor an einer dritten Position auf der Rohrleitung, insbesondere aussen auf der Rohrleitung, ein drittes Schallemissionssignal erfasst worden ist, wobei das vom jeweiligen vom wenigstens einen Schallemissionssensor ausgegebene dritte Schallemissionssensorsignal dem erfassten dritten Schallemissionssignal entspricht. Dies hat den Vorteil, dass ein Erstellen einer noch genaueren und zuverlässigeren Diagnose ermöglicht wird. Dabei ist unerheblich, ob der Schallemissionssensor, mit welchem das dritte Schallemissionssensorsignal ausgegeben worden ist, der gleiche Schallemissionssensor ist, mit welchem an der ersten Position auf der Rohrleitung das erste Schallemissionssignal erfasst worden ist, und/oder der gleiche Schallemissionssensor sein, mit welchem an der zweiten Position auf der Rohrleitung das zweite Schallemissionssignal erfasst worden ist, oder kann ein davon unterschiedlicher Schallemissionssensor sein.

Bevorzugt befindet sich entlang dem Flussweg betrachtet die dritte Position auf einer anderen Seite von der ersten Position als sich die zweite Position von der ersten Position befindet, womit sich die erste Position entlang dem Flussweg betrachtet zwischen der zweiten Position und der dritten Position befindet, wobei für das Erstellen der Diagnose ein Unterscheidungsmerkmal zwischen dem ersten Schallemissionssensorsignal und dem dritten Schallemissionssensorsignals mitberücksichtigt wird. Dies hat den Vorteil, dass sowohl Störgeräusche in den erfassten Schallemissionssignalen, deren Quelle von der ersten Position her gesehen jenseits von der zweiten Position liegt, als auch jenseits Störgeräusche, deren Quelle von der ersten Position her gesehen jenseits von der dritten Position liegt, als Störgeräusche identifiziert werden können. Entsprechend kann dadurch die Auswertung der Schallemissionssensorsignale angepasst werden, sodass die identifizierten Störgeräusche korrekt als solche behandelt werden. Dadurch wird eine präzisere Diagnose des Bauteils ermöglicht.

In einer bevorzugten Variante dazu befindet sich die dritte Position entlang dem Flussweg betrachtet auf einer anderen Seite von der zweiten Position als sich die erste Position von der zweiten Position befindet, womit die zweite Position entlang dem Flussweg betrachtet zwischen der ersten Position und der dritten Position befindet, wobei für das Erstellen der Diagnose ein Unterscheidungsmerkmal zwischen dem ersten Schallemissionssensorsignal oder dem zweiten Schallemissionssensorsignal und dem dritten Schallemissionssensorsignals mitberücksichtigt wird. Dies hat den Vorteil, dass Störgeräusche in den erfassten Schallemissionssignalen, deren Quelle von der ersten Position her gesehen jenseits von der dritten Position liegt, besser quantifiziert werden können, wodurch eine präzisere Diagnose des Bauteils ermöglicht wird.

Vorzugsweise wird die Diagnose des Bauteils unter Berücksichtigung eines vierten Schallemissionssensorsignals erstellt, wobei das vierte Schallemissionssensorsignal von einem vom wenigstens einen Schallemissionssensor ausgegeben worden ist, wobei mit dem jeweiligen vom wenigstens einen Schallemissionssensor an einer vierten Position auf der Rohrleitung, insbesondere aussen auf der Rohrleitung, ein viertes Schallemissionssignal erfasst worden ist, wobei das vom jeweiligen vom wenigstens einen Schallemissionssensor ausgegebene vierte Schallemissionssensorsignal dem erfassten vierten Schallemissionssignal entspricht. Dies hat den Vorteil, dass ein Erstellen einer noch genaueren und zuverlässigeren Diagnose ermöglicht wird. Dabei kann der Schallemissionssensor, von welchem das vierte Schallemissionssensorsignal ausgegeben worden ist, der gleiche Schallemissionssensor sein, mit welchem an der ersten Position auf der Rohrleitung das erste Schallemissionssignal erfasst worden, und/oder der gleiche Schallemissionssensor sein, mit welchem an der zweiten Position auf der Rohrleitung das zweite Schallemissionssignal erfasst worden ist, und/oder der gleiche Schallemissionssensor sein, mit welchem an der dritten Position auf der Rohrleitung das dritte Schallemissionssignal erfasst worden ist, oder kann ein davon unterschiedlicher Schallemissionssensor sein.

Vorzugsweise befindet sich entlang dem Flussweg betrachtet die vierte Position auf einer anderen Seite von der dritten Position als sich die erste Position von der dritten Position befindet, womit sich die dritte Position entlang dem Flussweg betrachtet zwischen der ersten Position und der vierten Position befindet, wobei für das Erstellen der Diagnose ein Unterscheidungsmerkmal zwischen dem ersten Schallemissionssensorsignal oder dem dritten Schallemissionssensorsignal und dem vierten Schallemissionssensorsignals mitberücksichtigt wird.

Wenn sich zudem entlang dem Flussweg betrachtet die dritte Position auf einer anderen Seite von der ersten Position befindet als sich die zweite Position von der ersten Position befindet, womit sich die erste Position entlang dem Flussweg betrachtet zwischen der zweiten Position und der dritten Position befindet, wobei für das Erstellen der Diagnose ein Unterscheidungsmerkmal zwischen dem ersten Schallemissionssensorsignal und dem dritten Schallemissionssensorsignals mitberücksichtigt wird, so hat dies den Vorteil, dass Störgeräusche in den erfassten Schallemissionssignalen, deren Quelle von der ersten Position her gesehen jenseits von der vierten Position liegt, besser quantifiziert werden können, wodurch eine präzisere Diagnose des Bauteils ermöglicht wird.

Wenn sich hingegen zudem sich die dritte Position entlang dem Flussweg betrachtet auf einer anderen Seite von der zweiten Position als sich die erste Position von der zweiten Position befindet, womit die zweite Position entlang dem Flussweg betrachtet zwischen der ersten Position und der dritten Position befindet, wobei für das Erstellen der Diagnose ein Unterscheidungsmerkmal zwischen dem ersten Schallemissionssensorsignal oder dem zweiten Schallemissionssensorsignal und dem dritten Schallemissionssensorsignals mitberücksichtigt wird, so hat dies den Vorteil, dass Störgeräusche in den erfassten Schallemissionssignalen, deren Quelle von der ersten Position her gesehen jenseits von der vierten Position liegt, wie noch besser quantifiziert werden können als Störgeräusche, deren Quellen von der ersten Position her gesehen jenseits der dritten Position liegt, wodurch eine noch präzisere Diagnose des Bauteils ermöglicht wird.

Vorzugsweise wird die Diagnose des Bauteils unter Berücksichtigung eines fünften Schallemissionssensorsignals erstellt, wobei das fünfte Schallemissionssensorsignal von einem vom wenigstens einen Schallemissionssensor ausgegeben worden ist, wobei mit dem jeweiligen vom wenigstens einen Schallemissionssensor an einer fünften Position auf der Rohrleitung, insbesondere aussen auf der Rohrleitung, ein fünftes Schallemissionssignal erfasst worden ist, wobei das vom jeweiligen vom wenigstens einen Schallemissionssensor ausgegebene fünfte Schallemissionssensorsignal dem erfassten fünften Schallemissionssignal entspricht. Dies hat den Vorteil, dass ein Erstellen einer noch genaueren und zuverlässigeren Diagnose ermöglicht wird. Dabei kann der Schallemissionssensor, von welchem das fünfte Schallemissionssensorsignal ausgegeben worden ist, der gleiche Schallemissionssensor sein, mit welchem an der ersten Position auf der Rohrleitung das erste Schallemissionssignal erfasst worden ist, und/oder der gleiche Schallemissionssensor sein, mit welchem an der zweiten Position auf der Rohrleitung das zweite Schallemissionssignal erfasst worden ist, und/oder der gleiche Schallemissionssensor sein, mit welchem an der dritten Position auf der Rohrleitung das dritte Schallemissionssignal erfasst worden ist, und/oder der gleiche Schallemissionssensor sein, mit welchem an der vierte Position auf der Rohrleitung das vierte Schallemissionssignal erfasst worden ist, oder kann ein davon unterschiedlicher Schallemissionssensor sein.

Vorzugsweise befindet sich entlang dem Flussweg betrachtet die fünfte Position auf einer anderen Seite von der ersten Position als sich die dritte Position von der ersten Position befindet, womit sich die erste Position entlang dem Flussweg betrachtet zwischen der dritten Position und der fünften Position befindet, wobei sich entlang dem Flussweg betrachtet die fünfte Position auf einer anderen Seite von der zweiten Position befindet als sich die dritte Position von der zweiten Position befindet, womit sich die zweite Position entlang dem Flussweg betrachtet zwischen der dritten Position und der fünften Position befindet, wobei für das Erstellen der Diagnose ein Unterscheidungsmerkmal zwischen dem ersten Schallemissionssensorsignal oder dem zweiten Schallemissionssensorsignal und dem fünften Schallemissionssensorsignals mitberücksichtigt wird.

Wenn sich zudem entlang dem Flussweg betrachtet die dritte Position auf einer anderen Seite von der ersten Position befindet als sich die zweite Position von der ersten Position befindet, womit sich die erste Position entlang dem Flussweg betrachtet zwischen der zweiten Position und der dritten Position befindet, wobei für das Erstellen der Diagnose ein Unterscheidungsmerkmal zwischen dem ersten Schallemissionssensorsignal und dem dritten Schallemissionssensorsignals mitberücksichtigt wird, so hat dies den Vorteil, dass sowohl Störgeräusche in den erfassten Schallemissionssignalen, deren Quelle von der ersten Position her gesehen jenseits von der vierten Position liegt, als auch Störgeräusche in den erfassten Schallemissionssignalen, deren Quelle von der ersten Position her gesehen jenseits von der fünften Position liegt, besser quantifiziert werden können, wodurch eine deutlich präzisere Diagnose des Bauteils ermöglicht wird.

Wenn sich hingegen zudem sich die dritte Position entlang dem Flussweg betrachtet auf einer anderen Seite von der zweiten Position als sich die erste Position von der zweiten Position befindet, womit die zweite Position entlang dem Flussweg betrachtet zwischen der ersten Position und der dritten Position befindet, wobei für das Erstellen der Diagnose ein Unterscheidungsmerkmal zwischen dem ersten Schallemissionssensorsignal oder dem zweiten Schallemissionssensorsignal und dem dritten Schallemissionssensorsignals mitberücksichtigt wird, so hat dies den Vorteil, dass einerseits Störgeräusche in den erfassten Schallemissionssignalen, deren Quelle von der ersten Position her gesehen jenseits von der vierten Position liegt, wie noch besser quantifiziert werden können als Störgeräusche, deren Quellen von der ersten Position her gesehen jenseits der dritten Position liegt, und dass andererseits auch dass Störgeräusche in den erfassten Schallemissionssignalen, deren Quelle von der ersten Position her gesehen jenseits von der fünften Position liegt, besser quantifiziert werden können, wodurch eine präzisere Diagnose des Bauteils ermöglicht wird.

Alternativ zu diesen Varianten besteht auch die Möglichkeit, dass nur vier Schallemissionssignale, nur drei Schallemissionssignale oder nur zwei Schallemissionssignale erfasst werden. Entsprechend werden in diesen Varianten für das Erstellen der Diagnose nur das erste, das zweite, das dritte und das vierte Schallemissionssensorsignal, nur das erste, das zweite, und das dritte Schallemissionssensorsignal bzw. nur das erste und das zweite Schallemissionssensorsignal mitberücksichtigt.

Vorteilhafterweise sind die Schallemissionssensorsignale elektronische Signale, welche vom jeweiligen das jeweilige Schallemissionssignal erfassenden Schallemissionssensor ausgegeben werden und dabei das jeweilige erfasste Schallemissionssignal zeitaufgelöst oder frequenzaufgelöst wiedergeben und damit dem jeweiligen erfassten Schallemissionssignal entsprechen. Dabei können die Schallemissionssensorsignale analoge oder digitale elektrische Signale sein. Unabhängig davon, ob die Schallemissionssensorsignale analoge oder digitale elektrische Signale sind, ist unter zeitaufgelöst vorzugsweise eine Amplitude, der Absolutbetrag der Amplitude oder Intensität (d.h. der quadrierte Absolutbetrag der Amplitude) zu verstehen, welche dem jeweiligen zeitaufgelöst erfassten Schallemissionssignal entspricht, während unter frequenzaufgelöst vorzugsweise die Fourier Transformation des zeitaufgelösten erfassten Schallemissionssignal bzw. das Schallemissionssignal im Frequenzraum zu verstehen ist.

Vorteilhafterweise werden die mit dem wenigstens einen Schallemissionssensor, insbesondere mit jedem des wenigstens einen Schallemissionssensors, erfassten Schallemissionssignale, insbesondere das erste Schallemissionssignal, dass zweite Schallemissionssignal sowie, falls das dritte Schallemissionssignal erfasst wird oder erfasst worden ist, auch das dritte Schallemissionssignal, falls das vierte Schallemissionssignal erfasst wird oder erfasst worden ist, auch das vierte Schallemissionssignal, und, falls das fünfte Schallemissionssignal erfasst wird oder erfasst worden ist, auch das fünfte Schallemissionssignal, über einen Frequenzbereich von etwa 1 kHz bis etwa 1 MHz, bevorzugt von 1 kHz bis 1 MHz, besonders bevorzugt von 25 kHz bis 500 kHz, ganz besonders bevorzugt von 25 kHz bis 300 kHz erfasst. Vorzugsweise decken entsprechend auch die vom jeweiligen Schallemissionssensor ausgegebenen Schallemissionssignale diesen Frequenzbereich von etwa 1 kHz bis etwa 1 MHz, bzw. von 1 kHz bis 1 MHz, bzw. von 25 kHz bis 500 kHz, bzw. von 25 kHz bis 300 kHz ab.

Da bei defekten Bauteilen, insbesondere bei leckenden Ventilen, die durch den Defekt bzw. die Leckage verursachten Vibrationen Schallemissionssignale in diesem Frequenzbereich verursachen, während viele oder Störgeräusche, welche im vom menschlichen Ohr hörbaren Bereich liegen, nicht in den Schallemissionssignalen enthalten sind. Somit können die für die Diagnose des Bauteils erforderlichen Schallemissionssignale auch in einer für den Menschen lauten Umgebung wie beispielsweise einer Produktionshalle in einer Fabrik erfasst werden.

Vorzugsweise wird an jeder der Positionen das jeweilige Schallemissionssignal mit dem jeweiligen des wenigstens einen Schallemissionssensors kontinuierlich während einer Zeitdauer von mindestens 1 s, besonders bevorzugt mindestens 2 s, erfasst. Dies hat den Vorteil, dass eine Analyse der Schallemissionssensorsignale, insbesondere frequenzabhängige Analyse der Schallemissionssensorsignale ein zuverlässigeres Ergebnis ermöglicht wird. Vorzugsweise wird an jeder der Positionen das jeweilige Schallemissionssignal mit dem jeweiligen des wenigstens einen Schallemissionssensor kontinuierlich während einer Zeitdauer von höchstens 20 s, besonders bevorzugt höchstens 10 s, ganz besonders bevorzugt höchstens 5 s, erfasst. Dies hat den Vorteil, dass das Erfassen der Schallemissionssignale nur wenig Zeit benötigt. Bevorzugt wird an jeder der Positionen das jeweilige Schallemissionssignal mit dem jeweiligen des wenigstens einen Schallemissionssensor kontinuierlich während einer Zeitdauer von 1 s bis 20 s oder 1 s bis 10 s, besonders bevorzugt von 2 s bis 10 s, ganz besonders bevorzugt von 2 s bis 5 s, erfasst.

Alternativ dazu besteht aber auch die Möglichkeit, dass an jeder der Positionen das jeweilige Schallemissionssignal mit dem jeweiligen des wenigstens einen Schallemissionssensors kontinuierlich während einer Zeitdauer von weniger als 1 s oder mehr als 20s aufgenommen wird.

Vorteilhafterweise wird für das Erstellen der Diagnose des Bauteils für jedes Schallemissionssensorsignal, d.h. für das erste Schallemissionssensorsignal, das zweite Schallemissionssensorsignal, gegebenenfalls das dritte Schallemissionssensorsignal, gegebenenfalls das vierte Schallemissionssensorsignal und gegebenenfalls das fünfte Schallemissionssensorsignal eine Ankopplungsstärke des jeweiligen des wenigstens einen Schallemissionssensors an der jeweiligen Position auf der Rohrleitung, insbesondere aussen auf der Rohrleitung, d.h. an der ersten Position, an der zweiten Position, gegebenenfalls an der dritten Position, gegebenenfalls an der vierten Position bzw. gegebenenfalls an der fünften Position, beim Erfassen des jeweiligen Schallemissionssignals, welchem Schallemissionssignal das jeweilige Schallemissionssensorsignal entspricht, mitberücksichtigt. Dies hat den Vorteil, dass durch unterschiedlich starke Ankopplungsstärken verursachte Unterschiede in der Intensität der Schallemissionssensorsignale für das Ermitteln der Diagnose des Bauteils mitberücksichtigt werden können, womit die Diagnose des Bauteils mit einer erhöhten Präzision ermittelt werden kann.

Bevorzugt ist hierzu an der jeweiligen Position auf der Rohrleitung, insbesondere aussen auf der Rohrleitung, d.h. an der ersten Position, an der zweiten Position, gegebenenfalls an der dritten Position, gegebenenfalls an der vierten Position bzw. gegebenenfalls an der fünften Position, bevor mit demjenigen der wenigstens zwei Schallemissionssensoren, mit welchem an der jeweiligen Position auf der Rohrleitung, insbesondere aussen auf der Rohrleitung, das jeweilige Schallemissionssignal erfasst worden ist, der jeweilige Schallemissionssensor an der jeweiligen Position auf der Rohrleitung, insbesondere aussen auf der Rohrleitung, positioniert und eine akustische Ankopplung des jeweiligen Schallemissionssensors an die Rohrleitung überprüft worden. Hierzu sind bevorzugt wenigstens zwei Schallemissionssensoren verwendet worden. Dabei ist bevorzugt zusätzlich dazu, dass der jeweilige der wenigstens zwei Schallemissionssensoren an der jeweiligen Position auf der Rohrleitung, insbesondere aussen auf der Rohrleitung, positioniert worden ist, ein weiterer der wenigstens zwei Schallemissionssensoren an einer zur jeweiligen Position benachbarten Position auf der Rohrleitung, insbesondere aussen auf der Rohrleitung, positioniert worden, wonach mit dem weiteren der wenigstens zwei Schallemissionssensoren das Testschallsignal ausgegeben, während mit demjenigen Schallemissionssensor, dessen akustische Ankopplung an die Rohrleitung überprüft worden ist, das Testschallsignal erfasst worden. Aufgrund des vom jeweiligen Schallemissionssensor erfassten Testschallsignals ist anschliessend vorzugsweise eine Empfangsstärke und damit eine Ankopplungsstärke des vom jeweiligen Schallemissionssensor erfassten Testschallsignals ermittelt worden. Falls die ermittelte Empfangsstärke bzw. die Ankopplungsstärke unterhalb einer vorgegebenen minimalen Stärke lag, so ist der jeweilige Schallemissionssensor vorzugsweise erneut an der jeweiligen Position positioniert und seine akustische Ankopplung an die Rohrleitung überprüft worden, bis die ermittelte Empfangsstärke bzw. Ankopplungsstärke mindestens der vorgegebenen minimalen Stärke entsprochen hat. Vorteilhafterweise ist erst wenn die für den jeweiligen Schallemissionssensor an der jeweiligen Position ermittelte Empfangsstärke bzw. Ankopplungsstärke mindestens der vorgegebenen minimalen Stärke entsprochen hat mit dem jeweiligen Schallemissionssensor das jeweilige Schallemissionssignal erfasst und vom jeweiligen Schallemissionssensor das dem jeweiligen erfassten Schallemissionssignal entsprechende Schallemissionssensorsignal ausgegeben worden. Dies hat den Vorteil, dass sichergestellt ist, dass die Schallemissionssignale ausreichend gut erfasst worden sind.

Alternativ dazu besteht aber auch die Möglichkeit, dass die akustische Ankopplung des Schallemissionssensors, mit welchem das jeweilige Schallemissionssignal erfasst worden ist, jeweils nicht überprüft worden ist.

Vorteilhafterweise wird für das Erstellen der Diagnose des Bauteils ein Aggregatszustand des Fluids und/oder ein Medium des Fluids mitberücksichtigt. Dies hat den Vorteil, dass Charakteristiken in den Schallemissionssignalen, welche durch den Aggregatszustand des Fluids bzw. durch das Medium des Fluids verursacht werden, für die Diagnose des Bauteils mitberücksichtig werden können. Dabei kann das Medium beispielsweise Wasser oder Luft sein oder aus einem Gemisch aus Luft und Wasserdampf zusammengesetzt sein. Das Medium kann aber auch etwas anderes als Wasser oder Luft sein. So kann das Medium beispielsweise Öl oder Erdgas sein. Genauso kann das Medium aber auch eine Mischung aus verschiedenen Chemikalien wie beispielsweise Pharmazeutika sein.

Alternativ dazu besteht aber auch die Möglichkeit, dass für das Erstellen der Diagnose des Bauteils weder der Aggregatszustand des Fluids noch das Medium des Fluids mitberücksichtigt wird.

Vorteilhafterweise wird für das Erstellen der Diagnose des Bauteils zudem eine Temperatur und/oder Viskosität des Fluids mitberücksichtigt. Dies hat den Vorteil, dass Charakteristiken in den Schallemissionssignalen, welche durch die Temperatur bzw. Viskosität des Fluids verursacht werden, für die Diagnose des Bauteils mitberücksichtig werden können.

Alternativ dazu besteht aber auch die Möglichkeit, dass für das Erstellen der Diagnose des Bauteils weder die Temperatur noch die Viskosität des Fluids mitberücksichtigt werden.

Vorzugsweise wird für das Erstellen der Diagnose des Bauteils ein Druckunterschied, insbesondere Druckabfall, in der Rohrleitung über das in die Rohrleitung eingebaute Bauteil mitberücksichtigt. Dabei ist der Druckunterschied in der Rohrleitung über das in die Rohrleitung eingebaute Bauteil vorzugsweise ein Unterschied zwischen einem Druck, unter welchem das Fluid an einer ersten Stelle in der Rohrleitung vom Bauteil her gesehen entlang dem Flussweg entgegen der Flussleitrichtung gerade an das Bauteil anschliessend steht, und einem Druck, unter welchem das Fluid an einer zweiten Stelle in der Rohrleitung vom Bauteil her gesehen entlang dem Flussweg in die Flussleitrichtung gerade an das Bauteil anschliessend steht, mitberücksichtigt wird. Wenn das Bauteil ein Ventil ist, so handelt es sich beim Druckunterschied vorzugsweise in Flussleitrichtung gesehen um einen Druckabfall. Wenn das Bauteil hingegen eine Pumpe ist, so kann es sich beim Druckunterschied in Flussleitrichtung hingegen auch um eine Druckzunahme handeln. Vorzugsweise wird der Druckunterschied durch eine Druckmessung an der ersten Stelle und durch eine Druckmessung an der zweiten Stelle ermittelt, wobei die Differenz zwischen den beiden Druckmessungen der Druckunterschied ist.

Das Mitberücksichtigen des Druckunterschieds, insbesondere Druckabfalls, in der Rohrleitung über das in die Rohrleitung eingebaute Bauteil für das Erstellen der Diagnose des Bauteils hat den Vorteil, dass auch Charakteristiken in den Schallemissionssignalen, welche durch unterschiedliche Fliessgeschwindigkeiten des Fluids verursacht werden, mitberücksichtigt werden können.

Unabhängig davon, ob für das Erstellen der Diagnose des Bauteils der Druckunterschied, insbesondere Druckabfall, in der Rohrleitung über das in die Rohrleitung eingebaute Bauteil mitberücksichtigt wird oder nicht, kann auch der Druck, unter welchem das Fluid an einer Stelle in der Rohrleitung vom Bauteil her gesehen entlang dem Flussweg entgegen die Flussleitrichtung gerade an das Bauteil anschliessend steht, mitberücksichtigt werden.

Vorteilhafterweise wird für das Erstellen der Diagnose des Bauteils der Bauteiltyp des Bauteils mitberücksichtigt, wobei, wenn das Bauteil ein Ventil ist, der Ventiltyp mitberücksichtigt wird. Wie vorgehend erläutert, kann das Bauteil beispielsweise ein Rohrstück, ein Verbindungsstück zum Verbinden von Rohrstücken, ein Ventil oder ein Kondensatabscheider sein. Entsprechend ist Bauteiltyp vorzugsweise ein Rohrstück, ein Verbindungsstück zum Verbinden von Rohrstücken, ein Ventil oder ein Kondensatabscheider. Dies hat den Vorteil, dass eine bauteiltypabhängige Diagnose des Bauteils ermöglicht wird, womit eine zuverlässigere Diagnose ermöglicht wird, weil bauteiltypabhängige Charakteristiken in den Schallemissionssignalen mitberücksichtigt werden können.

Vorzugsweise wird für das Erstellen der Diagnose des Bauteils zudem eine Grösse des Bauteils, insbesondere ein Innendurchmesser, mitberücksichtigt, wobei, wenn das Bauteil ein Ventil ist, eine Nennweite des Ventils als Grösse des Bauteils mitberücksichtigt wird.

Alternativ zu diesen Varianten besteht aber auch die Möglichkeit, dass weder die Grösse des Bauteils noch der Bauteiltyp für das Erstellen der Diagnose des Bauteils mitberücksichtigt wird.

Vorzugsweise wird für das Erstellen der Diagnose des Bauteils von jedem der erfassten Schallemissionssignale eine Fast Fourier Transformation berechnet. Dabei ist unerheblich, ob die Fast Fourier Transformation noch im Schallemissionssensor berechnet wird, mit welchem das jeweilige Schallemissionssignal erfasst wird, und vom jeweiligen Schallemissionssensor das Schallemissionssensorsignal als Fast Fourier Transformation des erfassten Schallemissionssignal ausgegeben wird, oder ob die Fast Fourier Transformation vom jeweiligen Schallemissionssensorsignal berechnet wird.

Unabhängig davon hat die Fast Fourier Transformation den Vorteil, dass für die Diagnose des Bauteils ein oder mehrere Teilbereiche des Frequenzbereichs, über welchen Frequenzbereich die Schallemissionssignale erfasst werden, für sich ausgewertet werden können, indem der gewünschte Teilbereich der Fast Fourier Transformation des dem jeweiligen Schallemissionssignal entsprechenden Schallemissionssensorsignals für sich ausgewertet wird bzw. indem die gewünschten Teilbereiche der Fast Fourier Transformation des dem jeweiligen Schallemissionssignal entsprechenden Schallemissionssensorsignals für sich ausgewertet werden.

Alternativ dazu besteht aber auch die Möglichkeit dass für das Erstellen der Diagnose des Bauteils von jedem der erfassten Schallemissionssignale keine Fast Fourier Transformation berechnet wird. Dies kann beispielsweise der Fall sein, wenn die Diagnose des Bauteils durch ein Auswerteverfahren gestützt auf überwachtem maschinellem Lernen erstellt wird.

Bevorzugt werden für das Erstellen der Diagnose des Bauteils die Schallemissionssensorsignale über einen Teilbereich des Frequenzbereichs, über welchen Frequenzbereich die Schallemissionssignale erfasst werden, ausgewertet. Dies hat den Vorteil, dass situativ der geeignetste Teilbereich für die Auswertung gewählt werden kann.

Wenn dabei für das Erstellen der Diagnose des Bauteils ein Aggregatszustand des Fluids und/oder ein Medium des Fluids mitberücksichtigt wird und das Medium Dampf, insbesondere aus einem Gemisch aus Luft und Wasser zusammengesetzter Dampf, ist, so ist der Teilbereich vorzugsweise von etwa 200 kHz bis etwa 250 kHz, besonders bevorzugt von 200 kHz bis 250 kHz. Dabei kann der Teilbereich aber auch höher gewählt sein und von etwa 250 kHz bis etwa 300 kHz, insbesondere von 250 kHz bis 300 kHz, sein. Der Teilbereich kann aber auch noch höher gewählt sein und beispielsweise von etwa 300 kHz bis etwa 350 kHz, insbesondere von 300 kHz bis 350 kHz, sein.

Wenn für das Erstellen der Diagnose des Bauteils ein Aggregatszustands des Fluids und/oder ein Medium des Fluids mitberücksichtigt wird, wobei das Medium nicht Dampf ist, insbesondere, wenn der Aggregatszustand des Fluids entweder gasförmig oder flüssig ist bzw. wenn das Medium entweder ein Gas oder eine Flüssigkeit ist, so ist der Teilbereich vorzugsweise von etwa 25 kHz bis etwa 50 kHz, besonders bevorzugt von 25 kHz bis 50 kHz. Dabei kann der Teilbereich auch höher gewählt sein und von etwa 50 kHz bis etwa 100 kHz, insbesondere von 50 kHz bis 100 kHz, sein. Der Teilbereich kann aber auch noch höher gewählt sein und beispielsweise von etwa 100 kHz bis etwa 150 kHz, insbesondere von 100 kHz bis 150 kHz, sein.

Vorteilhafterweise werden für das Erstellen der Diagnose des Bauteils die Schallemissionssensorsignale über den Teilbereich des Frequenzbereichs, über welchen Frequenzbereich die Schallemissionssignale erfasst werden, ausgewertet, indem für diesen Teilbereich mindestens eine Kennzahl des jeweiligen Schallemissionssensorsignals ermittelt wird. Dies hat den Vorteil, dass aufgrund der Kennzahlen die verschiedenen Schallemissionssensorsignale auf einfache Art und Weise miteinander verglichen werden können.

Vorzugsweise ist eine der mindestens einen Kennzahl ein quadratisches Mittel (RMS) des jeweiligen Schallemissionssensorsignals innerhalb des Teilbereichs. Vorzugsweise wird dabei das quadratische Mittel

$$RMS = \sqrt{\frac{1}{n}\sum_{i=1}^{n} f_i^2}$$

(RMS) nach der Formel berechnet, wobei n die Anzahl Datenpunkte in der Fast Fourier Transformation im Teilbereich ist und $f_i$ der Wert des i-ten Datenpunkts in der Fast Fourier Transformation im Teilbereich ist.

Vorzugsweise sind die mindestens eine Kennzahl mindestens zwei Kennzahlen, wobei eine dieser mindestens zwei Kennzahlen die maximale Amplitude des jeweiligen Schallemissionssensorsignals innerhalb des Teilbereichs ist und eine dieser mindestens zwei Kennzahlen eine durchschnittliche Amplitude des jeweiligen Schallemissionssensorsignals ist.

Alternativ dazu besteht aber auch die Möglichkeit, dass die mindestens zwei Kennzahlen andere Kennzahlen sind. Auch besteht die Möglichkeit, dass die mindestens eine Kennzahl nur eine Kennzahl ist.

Vorzugsweise wird als Unterscheidungsmerkmal zwischen einem der Schallemissionssensorsignale und einem anderen der Schallemissionssensorsignal ein Unterschied zwischen der mindestens einen Kennzahl, welche für den Teilbereich des einen der Schallemissionssensorsignals ermittelt wurde, und der mindestens einen Kennzahl, welche für den Teilbereich des anderen der Schallemissionssensorsignale ermittelt wurde, verwendet. D.h. vorteilhafterweise wird dabei für das Erstellen der Diagnose als Unterscheidungsmerkmal zwischen dem ersten Schallemissionssensorsignal und dem zweiten Schallemissionssensorsignals ein Unterschied zwischen der mindestens einen Kennzahl, welche für den Teilbereich des ersten Schallemissionssensorsignals ermittelt wurde, und der mindestens einen Kennzahl, welche für den Teilbereich des zweiten Schallemissionssensorsignals ermittelt wurde, verwendet. Falls für das Erstellen der Diagnose ein Unterscheidungsmerkmal zwischen dem ersten Schallemissionssensorsignal und dem dritten Schallemissionssensorsignals mitberücksichtigt wird, so wird bevorzugt für das Erstellen der Diagnose als Unterscheidungsmerkmal zwischen dem ersten Schallemissionssensorsignal und dem dritten Schallemissionssensorsignal ein Unterschied zwischen der mindestens einen Kennzahl, welche für den Teilbereich des ersten Schallemissionssensorsignals ermittelt wurde, und der mindestens einen Kennzahl, welche für den Teilbereich des dritten Schallemissionssensorsignals ermittelt wurde, verwendet. Falls für das Erstellen der Diagnose ein Unterscheidungsmerkmal zwischen dem zweiten Schallemissionssensorsignal und dem dritten Schallemissionssensorsignal mitberücksichtigt wird, so wird bevorzugt für das Erstellen der Diagnose als Unterscheidungsmerkmal zwischen dem zweiten Schallemissionssensorsignal und dem dritten Schallemissionssensorsignal ein Unterschied zwischen der mindestens einen Kennzahl, welche für den Teilbereich des zweiten Schallemissionssensorsignals ermittelt wurde, und der mindestens einen Kennzahl, welche für den Teilbereich des dritten Schallemissionssensorsignals ermittelt wurde, verwendet. Falls für das Erstellen der Diagnose ein Unterscheidungsmerkmal zwischen dem ersten Schallemissionssensorsignal und dem vierten Schallemissionssensorsignal mitberücksichtigt wird, so wird bevorzugt für das Erstellen der Diagnose als Unterscheidungsmerkmal zwischen dem ersten Schallemissionssensorsignal und dem vierten Schallemissionssensorsignal ein Unterschied zwischen der mindestens einen Kennzahl, welche für den Teilbereich des ersten Schallemissionssensorsignals ermittelt wurde, und der mindestens einen Kennzahl, welche für den Teilbereich des vierten Schallemissionssensorsignals ermittelt wurde, verwendet. Falls für das Erstellen der Diagnose ein Unterscheidungsmerkmal zwischen dem dritten Schallemissionssensorsignal und dem vierten Schallemissionssensorsignal mitberücksichtigt wird, so wird bevorzugt für das Erstellen der Diagnose als Unterscheidungsmerkmal zwischen dem dritten Schallemissionssensorsignal und dem vierten Schallemissionssensorsignals ein Unterschied zwischen der mindestens einen Kennzahl, welche für den Teilbereich des dritten Schallemissionssensorsignals ermittelt wurde, und der mindestens einen Kennzahl, welche für den Teilbereich des vierten Schallemissionssensorsignals ermittelt wurde, verwendet. Falls für das Erstellen der Diagnose ein Unterscheidungsmerkmal zwischen dem ersten Schallemissionssensorsignal und dem fünften Schallemissionssensorsignal mitberücksichtigt wird, so wird bevorzugt für das Erstellen der Diagnose als Unterscheidungsmerkmal zwischen dem ersten Schallemissionssensorsignal und dem fünften Schallemissionssensorsignal ein Unterschied zwischen der mindestens einen Kennzahl, welche für den Teilbereich des ersten Schallemissionssensorsignals ermittelt wurde, und der mindestens einen Kennzahl, welche für den Teilbereich des fünften Schallemissionssensorsignals ermittelt wurde, verwendet. Falls für das Erstellen der Diagnose ein Unterscheidungsmerkmal zwischen dem zweiten Schallemissionssensorsignal und dem fünften Schallemissionssensorsignal mitberücksichtigt wird, so wird bevorzugt für das Erstellen der Diagnose als Unterscheidungsmerkmal zwischen dem zweiten Schallemissionssensorsignal und dem fünften Schallemissionssensorsignal ein Unterschied zwischen der mindestens einen Kennzahl, welche für den Teilbereich des zweiten Schallemissionssensorsignals ermittelt wurde, und der mindestens einen Kennzahl, welche für den Teilbereich des fünften Schallemissionssensorsignals ermittelt wurde, verwendet.

Alternativ zu diesen Varianten besteht aber auch die Möglichkeit, dass als Unterscheidungsmerkmal zwischen einem der Schallemissionssensorsignale und einem anderen der Schallemissionssensorsignal nicht ein Unterschied zwischen der mindestens einen Kennzahl, welche für den Teilbereich des einen der Schallemissionssensorsignals ermittelt wurde, und der mindestens einen Kennzahl, welche für den Teilbereich des anderen der Schallemissionssensorsignale ermittelt wurde, verwendet wird. So können beispielsweise die Kennzahlen auch für sich alleine Verwendet werden. Dies kann beispielsweise der Fall sein, wenn die Diagnose des Bauteils durch ein Auswerteverfahren gestützt auf überwachtem maschinellem Lernen erstellt wird.

Bevorzugt wird die Diagnose des Bauteils unter Berücksichtigung des ersten Schallemissionssensorsignals sowie mindestens zwei weiterer der Schallemissionssensorsignale, d.h. basierend auf dem ersten Schallemissionssensorsignal, sowie mindestens zwei des vorgehend erwähnten zweiten Schallemissionssensorsignals, des vorgehend erwähnten dritten Schallemissionssensorsignals, des vorgehend erwähnten vierten Schallemissionssensorsignals und des vorgehend erwähnten fünften Schallemissionssensorsignals, erstellt, wobei sich die erste Position entlang dem Flussweg betrachtet zwischen den beiden Positionen befindet, an welchen zwei der mindestens zwei weiteren der Schallemissionssignale erfasst worden sind, wobei, wenn für eine der mindestens einen Kennzahl, insbesondere das quadratische Mittel (RMS) des jeweiligen Schallemissionssensorsignals innerhalb des Teilbereichs oder die durchschnittliche Amplitude des jeweiligen Schallemissionssensorsignals innerhalb des Teilbereichs, eine Bedingung erfüllt ist, wonach die eine der mindestens einen Kennzahl für den Teilbereich des ersten Schallemissionssensorsignals ermittelt einen Wert aufweist, welcher Wert zwischen dem für den Teilbereich des einen der zwei der mindestens zwei weiteren der Schallemissionssensorsignale ermittelten Wert der einen der mindestens einen Kennzahl und dem für den Teilbereich des anderen der zwei der mindestens zwei weiteren der Schallemissionssensorsignale ermittelten Wert der einen der mindestens einen Kennzahl liegt, der Teilbereich innerhalb des Frequenzbereichs, über welchen Frequenzbereich die Schallemissionssignale erfasst werden, zu höheren Frequenzen verschoben wird und für das Erstellen der Diagnose des Bauteils die Schallemissionssensorsignale über den verschobenen Teilbereich des Frequenzbereichs, über welchen Frequenzbereich die Schallemissionssignale erfasst werden, ausgewertet werden, indem für diesen verschobenen Teilbereich die mindestens eine Kennzahl des jeweiligen Schallemissionssensorsignals ermittelt wird.

D.h., die vorgehend für den Teilbereich beschriebene Auswertung wird für den verschobenen Teilbereich wiederholt. Somit kann die vorgehend für den Teilbereich beschriebene Auswertung mit anschliessendem Verschieben des Teilbereichs und wiederholter Auswertung für den verschobenen Teilbereich mehrfach wiederholt werden, sodass letztlich der Teilbereich mehrfach verschoben wird, bis die Bedingung, wonach der Wert der jeweiligen Kennzahl, welche für den Teilbereich des ersten Schallemissionssensorsignals ermittelt wurde, zwischen den Werten der jeweiligen Kennzahl liegt, welche für den Teilbereich für die zwei der mindestens zwei weiteren der Schallemissionssignale ermittelt worden sind, der Teilbereich innerhalb des Frequenzbereichs, über welchen Frequenzbereich die Schallemissionssignale erfasst werden, nicht mehr erfüllt ist und der zuletzt erhaltene Teilbereich für die weitere Auswertung für das Erstellen der Diagnose verwendet wird.

Dieses Vorgehen hat den Vorteil, dass durch abseits der ersten Position und damit abseits des Bauteils, für welches die Diagnose erstellt wird, angeordnete Quellen verursachte Störgeräusche ausgeblendet werden können, da ein Teilbereich gesucht wird, in welchem die Störgeräusche in den erfassten Schallemissionssensorsignalen nicht vorhanden sind oder zumindest nur eine untergeordnete Rolle spielen. Entsprechend wird dadurch das Erstellen einer präziseren Diagnose des Bauteils ermöglicht.

Bei diesem Vorgehen ist unerheblich, ob sich der verschobene Teilbereich vollständig ausserhalb bzw. oberhalb des zuvor verwendeten Teilbereichs befindet oder ob der verschobene Teilbereich mit dem zuvor verwendeten Teilbereich teilweise überlappend ist. Letzteres ist beispielsweise der Fall, wenn der Teilbereich jeweils nur wenig zu grösseren Frequenzen verschoben wird, z.B. wenn sich der Teilbereich über 25 kHz erstreckt und die Untergrenze und Obergrenze des Teilbereichs nur um 5 kHz nach oben verschoben werden.

Wenn für das Erstellen der Diagnose des Bauteils ein Aggregatszustand des Fluids und/oder ein Medium des Fluids mitberücksichtigt wird und das Medium Dampf, insbesondere aus einem Gemisch aus Luft und Wasser zusammengesetzter Dampf, ist, so ist der Teilbereich, auf welchen die beschrieben Auswertung durchgeführt wird, vorzugsweise von etwa 200 kHz bis etwa 250 kHz, besonders bevorzugt von 200 kHz bis 250 kHz, während der verschobene Teilbereich von etwa 250 kHz bis etwa 300 kHz, insbesondere von 250 kHz bis 300 kHz, oder von etwa 300 kHz bis etwa 350 kHz, insbesondere von 300 kHz bis 350 kHz, ist. Wenn der Teilbereich, auf welchen die beschrieben Auswertung durchgeführt wird, hingegen von etwa 250 kHz bis etwa 300 kHz, besonders bevorzugt von 250 kHz bis 300 kHz, ist, so ist der verschobene Teilbereich vorzugsweise von etwa 300 kHz bis etwa 350 kHz, insbesondere von 300 kHz bis 350 kHz. Im letzteren Fall kann der Teilbereich von etwa 250 kHz bis etwa 300 kHz, besonders bevorzugt von 250 kHz bis 300 kHz, auf welchen die beschrieben Auswertung durchgeführt wird, bereits ein verschobener Teilbereich sein. D.h., die vorgehend für den Teilbereich beschriebene Auswertung mit anschliessendem Verschieben des Teilbereichs und wiederholter Auswertung für den verschobenen Teilbereich kann mehrfach wiederholt werden, sodass letztlich der Teilbereich mehrfach verschoben wird, bis die Bedingung, wonach der Wert der jeweiligen Kennzahl, welche für den jeweiligen Teilbereich des ersten Schallemissionssensorsignals ermittelt wurde, zwischen den Werten der jeweiligen Kennzahl liegt, welche für den jeweiligen Teilbereich für die zwei der mindestens zwei weiteren der Schallemissionssignale ermittelt worden sind, der jeweilige Teilbereich innerhalb des Frequenzbereichs, über welchen Frequenzbereich die Schallemissionssignale erfasst werden, nicht mehr erfüllt ist und der zuletzt erhaltene Teilbereich für die weitere Auswerdung für das Erstellen der Diagnose verwendet wird.

Wenn für das Erstellen der Diagnose des Bauteils ein Aggregatszustand des Fluids und/oder ein Medium des Fluids mitberücksichtigt wird, wobei das Medium nicht Dampf ist, insbesondere, wenn der Aggregatszustand des Fluids entweder gasförmig oder flüssig ist bzw. wenn das Medium entweder ein Gas oder eine Flüssigkeit ist, so ist der Teilbereich vorzugsweise von etwa 25 kHz bis etwa 50 kHz, besonders bevorzugt von 25 kHz bis 50 kHz, während der verschobene Teilbereich von etwa 50 kHz bis etwa 100 kHz, insbesondere von 50 kHz bis 100 kHz, oder von etwa 100 kHz bis etwa 150 kHz, insbesondere von 100 kHz bis 150 kHz, ist. Wenn der Teilbereich, auf welchen die beschrieben Auswertung durchgeführt wird, hingegen von etwa 50 kHz bis etwa 100 kHz, besonders bevorzugt von 50 kHz bis 100 kHz, ist, so ist der verschobene Teilbereich vorzugsweise von etwa 100 kHz bis etwa 150 kHz, insbesondere von 100 kHz bis 150 kHz. Im letzteren Fall kann der Teilbereich von etwa 50 kHz bis etwa 100 kHz, besonders bevorzugt von 50 kHz bis 100 kHz, auf welchen die beschrieben Auswertung durchgeführt wird, bereits ein verschobener Teilbereich sein.

Als Alternative besteht aber auch die Möglichkeit, dass der Teilbereich nicht wie vorgehend beschrieben verschoben wird.

Vorteilhafterweise wird die Diagnose des Bauteils unter Berücksichtigung des ersten Schallemissionssensorsignals sowie mindestens eines weiteren der Schallemissionssensorsignale, d.h. basierend auf dem ersten Schallemissionssensorsignal, sowie mindestens einem des vorgehend erwähnten zweiten Schallemissionssensorsignals, des vorgehend erwähnten dritten Schallemissionssensorsignals, des vorgehend erwähnten vierten Schallemissionssensorsignals und des vorgehend erwähnten fünften Schallemissionssensorsignals, erstellt, wobei, wenn für eine der mindestens einen Kennzahl, insbesondere das quadratische Mittel (RMS) des jeweiligen Schallemissionssensorsignals innerhalb des Teilbereichs oder die durchschnittliche Amplitude des jeweiligen Schallemissionssensorsignals innerhalb des Teilbereichs, eine Bedingung erfüllt ist, wonach die eine der mindestens einen Kennzahl für den Teilbereich des ersten Schallemissionssensorsignals ermittelt einen Wert aufweist, welcher Wert um mindestens einen Grenzwert grösser als der für den Teilbereich des mindestens einen weiteren der Schallemissionssensorsignale ermittelte Wert der einen der mindestens einen Kennzahl ist, als Diagnose des Bauteils das Bauteil als defekt diagnostiziert wird.

Somit wird als Unterscheidungsmerkmal zwischen dem ersten Schallemissionssensorsignal und einem mindestens einen weiteren der Schallemissionssensorsignale ein Unterschied zwischen der mindestens einen Kennzahl, welche für den Teilbereich des ersten Schallemissionssensorsignals ermittelt wird, und der mindestens einen Kennzahl, welche für den Teilbereich des mindestens einen weiteren der Schallemissionssensorsignale ermittelt wird, verwendet und für das Erstellen der Diagnose des Bauteils mitberücksichtigt. Dies hat den Vorteil, dass eine zuverlässige Diagnose des Bauteils ermöglicht wird.

Wenn die Diagnose des Bauteils unter Berücksichtigung des ersten Schallemissionssensorsignals sowie mindestens zwei weiteren der Schallemissionssensorsignale, d.h. basierend auf dem ersten Schallemissionssensorsignal, sowie mindestens zwei des vorgehend erwähnten zweiten Schallemissionssensorsignals, des vorgehend erwähnten dritten Schallemissionssensorsignals, des vorgehend erwähnten vierten Schallemissionssensorsignals und des vorgehend erwähnten fünften Schallemissionssensorsignals, erstellt wird, wobei sich die erste Position entlang dem Flussweg betrachtet zwischen den beiden Positionen befindet, an welchen zwei der mindestens zwei weiteren der Schallemissionssignale erfasst worden sind, so wird als Diagnose des Bauteils das Bauteil bevorzugt nur dann als defekt diagnostiziert, wenn für die eine der mindestens einen Kennzahl, insbesondere das quadratische Mittel (RMS) des jeweiligen Schallemissionssensorsignals innerhalb des Teilbereichs oder die durchschnittliche Amplitude des jeweiligen Schallemissionssensorsignals innerhalb des Teilbereichs, die Bedingung erfüllt ist, wonach die eine der mindestens einen Kennzahl für den Teilbereich des ersten Schallemissionssensorsignals ermittelt einen Wert aufweist, welcher Wert um mindestens den Grenzwert grösser als der für den Teilbereich des einen der zwei der mindestens zwei weiteren der Schallemissionssensorsignale ermittelte Wert der einen der mindestens einen Kennzahl und um mindestens den Grenzwert grösser als der für den Teilbereich des anderen der zwei der mindestens zwei weiteren der Schallemissionssensorsignale ermittelte Wert der einen der mindestens einen Kennzahl ist. Dieses Vorgehen hat den Vorteil, dass durch abseits der ersten Position und damit abseits des Bauteils, für welches die Diagnose erstellt wird, angeordnete Quellen verursachte Störgeräusche ausgeblendet werden, da sichergestellt ist, dass in den erfassten Schallemissionssensorsignalen keine derartigen Störgeräusche vorhanden sind oder zumindest nur eine untergeordnete Rolle spielen. Entsprechend wird dadurch das Erstellen einer präziseren und zuverlässigeren Diagnose des Bauteils ermöglicht.

Vorteilhafterweise wird für das Erstellen der Diagnose des Bauteils als Diagnose des Bauteils das Bauteil nur dann als defekt diagnostiziert, wenn für jedes der zum ersten Schallemissionssensorsignal zusätzlich erfassten weiteren der Schallemissionssensorsignale, d.h. das zweite Schallemissionssensorsignal, gegebenenfalls das dritte Schallemissionssensorsignal, gegebenenfalls das vierte Schallemissionssensorsignal und gegebenenfalls das fünfte Schallemissionssensorsignal, für eine der mindestens einen Kennzahl, insbesondere das quadratische Mittel (RMS) des jeweiligen Schallemissionssensorsignals innerhalb des Teilbereichs oder die durchschnittliche Amplitude des jeweiligen Schallemissionssensorsignals innerhalb des Teilbereichs, die Bedingung erfüllt ist, wonach die eine der mindestens einen Kennzahl für den Teilbereich des ersten Schallemissionssensorsignals ermittelt einen Wert aufweist, welcher Wert um mindestens den Grenzwert grösser als der für den Teilbereich des jeweiligen der zum ersten Schallemissionssensorsignal zusätzlich erfassten weiteren der Schallemissionssensorsignale ermittelte Wert der einen der mindestens einen Kennzahl ist. Dieses Vorgehen hat den Vorteil, dass durch abseits der ersten Position und damit abseits des Bauteils, für welches die Diagnose erstellt wird, angeordnete Quellen verursachte Störgeräusche ausgeblendet werden, da sichergestellt ist, dass in den erfassten Schallemissionssensorsignalen keine derartigen Störgeräusche vorhanden sind oder zumindest nur eine untergeordnete Rolle spielen. Entsprechend wird dadurch das Erstellen einer präziseren und zuverlässigeren Diagnose des Bauteils ermöglicht.

Wenn das Bauteil ein Ventil ist und die Schallemissionssignale bei geschlossenem Ventil erfasst worden sind, so wird dabei vorzugsweise ein Leck des Ventils, d.h. das Ventil als leckend, diagnostiziert, wenn als Diagnose des Bauteils das Bauteil als defekt diagnostiziert wird. In einer bevorzugten Variante davon wird in Abhängigkeit davon, um wieviel der Wert der jeweiligen Kennzahl, welche für den Teilbereich des ersten Schallemissionssensorsignals ermittelt wurde, grösser als der Wert der jeweiligen Kennzahl ist, welche für den Teilbereich des mindestens einen weiteren der Schallemissionssensorsignale ermittelt wurde, die Leckagerate des Ventils bestimmt. Insbesondere wird bevorzugt eine grössere Leckagerate bestimmt, je grösser der Wert der jeweiligen Kennzahl, welche für den Teilbereich des ersten Schallemissionssensorsignals ermittelt wurde, grösser als der Wert der jeweiligen Kennzahl ist, welche für den Teilbereich des mindestens einen weiteren der Schallemissionssensorsignale ermittelt wurde.

Alternativ zu diesen Varianten besteht aber auch die Möglichkeit, dass für das Erstellen der Diagnose des Bauteils die Schallemissionssensorsignale nicht über einen Teilbereich des Frequenzbereichs, über welchen Frequenzbereich die Schallemissionssignale erfasst werden, ausgewertet werden, sondern dass für das Erstellen der Diagnose des Bauteils die Schallemissionssensorsignale über den ganzen Frequenzbereich, über welchen Frequenzbereich die Schallemissionssignale erfasst werden, ausgewertet werden .

Vorteilhafterweise wird die Diagnose des Bauteils durch ein Auswerteverfahren gestützt auf überwachtem maschinellem Lernen erstellt. Dies hat den Vorteil, dass mit zunehmenden Trainingsdaten auf einfache Art und Weise eine zuverlässigere und präzisere Diagnose des Bauteils ermöglicht wird.

Bevorzugt wird das überwachte maschinelle Lernen durch Trainieren eines Algorithmus mit Trainingsdaten erreicht. Die Trainingsdaten beinhalten bevorzugt an einem Teststand erfasste Daten. Dabei können die Trainingsdaten beispielsweise mit der nachfolgend beschriebenen Anordnung erfasst worden sein. Die Trainingsdaten können aber auch an einer oder mehreren Rohrleitungen erfasste Daten beinhalten, in welche Rohrleitungen ein Bauteil eingebaut ist, für welches Bauteil mit dem erfindungsgemässen Verfahren eine Diagnose erstellt worden ist. Dabei wird jedoch vorzugsweise die Diagnose des Bauteils nachträglich verifiziert, beispielsweise durch Ausbauen und untersuchen des Bauteils, sodass in der Zustand des Testbauteils bzw. Bauteils, zu welchem die jeweiligen Schallemissionssensorsignale gehören, bekannt ist und damit Informationen zur zu den jeweiligen Schallemissionssensorsignalen zugeordneten Diagnose des Bauteils zu den Trainingsdaten aufgenommen werden.

Der Teststand umfasst vorzugsweise eine Testrohrleitung mit einem darin eingebauten Testbauteil, insbesondere Testventil, wobei die Testrohrleitung vorzugsweise bauähnlich mit Rohrleitungen ist, an welchen für ein darin eingebautes Bauteil mit dem erfindungsgemässen Verfahren die Diagnose erstellt werden soll, während das Testbauteil vorzugsweise bauähnlich, besonders bevorzugt baugleich, mit dem Bauteil ist, für welches Bauteil mit dem erfindungsgemässen Verfahren die Diagnose erstellt werden soll. So kann das Testbauteil beispielsweise ein Ventil des gleichen Typs sein wie das Ventil, für welches mit dem erfindungsgemässen Verfahren die Diagnose erstellt werden soll.

Die Trainingsdaten umfassen vorteilhafterweise eine Vielzahl von Trainingsdatensets, wobei jedes Trainingsdatenset vorzugsweise ein erstes Trainingsschallemissionssensorsignal und ein zweites Trainingsschallemissionssensorsignal sowie gegebenenfalls ein drittes Trainingsschallemissionssensorsignal, gegebenenfalls ein viertes Trainingsschallemissionssensorsignal und gegebenenfalls ein fünftes Trainingsschallemissionssensorsignal beinhaltet. Diese Trainingsschallemissionssensorsignale sind vorzugsweise vom wenigstens einen Schallemissionssensor ausgegeben worden und entsprechend dem vom jeweiligen des wenigstens einen Schallemissionssensors an der ersten Position bzw. zweiten Position bzw. dritten Position bzw. vierten Position bzw. fünften Position, insbesondere aussen auf der Testrohrleitung bzw. Rohrleitung, erfassten Schallemissionssignal. Im Falle von an einer oder mehreren Rohrleitungen beim Einsatz des erfindungsgemässen Verfahrens erfassten Trainingsdaten ist somit das jeweilige Trainingsschallemissionssensorsignal bevorzugt das jeweilige Schallemissionssensorsignal, während im Falle von am Teststand erfassten Trainingsdaten das jeweilige Trainingsschallemissionssensorsignal bevorzugt dem an der jeweiligen Position auf der Testrohrleitung, insbesondere aussen auf der Testrohrleitung, erfassten Schallemissionssignal entspricht. D.h., die am Teststand aufgenommenen Trainingsschallemissionssensorsignale sind vorzugsweise analog dazu, wie die Schallemissionssensorsignale vorgehend beschrieben auf der Rohrleitung, insbesondere aussen auf der Rohrleitung, aufgenommen worden sind, aufgenommen worden.

Bevorzugt werden die Trainingsschallemissionssensorsignale frequenzaufgelöst im Frequenzraum für das überwachte maschinelle Lernen die resultierenden Fast Fourier Transformation verwendet. Falls vom mindestens einen Schallemissionssensor die Schallemissionssensorsignale bzw. Trainingsschallemissionssensorsignale zeitaufgelöst ausgegeben werden, so wird bevorzugt von jedem zeitaufgelösten Trainingsschallemissionssensorsignal eine Fast Fourier Transformation berechnet, wobei für das überwachte maschinelle Lernen jeweils die resultierende Fast Fourier Transformation verwendet werden. Vorzugsweise werden die frequenzaufgelösten Trainingsschallemissionssensorsignale bzw. die Fast Fourier Transformationen geglättet, bevor sie für das überwachte maschinelle Lernen verwendet werden. Hierzu können sie beispielsweise mit einer Gausskurve gefaltet werden.

Vorzugsweise beinhaltet weiter jedes Trainingsdatenset den Zustand des Testbauteils bzw. Bauteils, zu welchem die Trainingsschallemissionssensorsignale des jeweiligen Trainingsdatensets gehören, und damit Informationen zur zu den Trainingsschallemissionssensorsignalen des jeweiligen Trainingsdatensets zugeordneten Diagnose des Testbauteils bzw. des Bauteils. Mit den Informationen zur zu den Trainingsschallemissionssensorsignalen des jeweiligen Trainingsdatensets zugeordneten Diagnose des Testbauteils bzw. des Bauteils enthalten die Testdaten eine Klassifikation der Trainingsschallemissionssensorsignale.

Falls das jeweilige Trainingsdatenset am Teststand aufgenommen worden ist und das dabei verwendete Testbauteil ein leckendes Testventil ist, so beinhaltet das jeweilige Trainingsdatenset zudem bevorzugt die jeweils am Teststand bestimmte Leckagerate des Testventils.

Falls das jeweilige Trainingsdatenset am Teststand aufgenommen worden ist, so beinhaltet jedes Trainingsdatenset bevorzugt für jedes Trainingsschallemissionssensorsignal, d.h. für das erste Trainingsschallemissionssensorsignal, das zweite Trainingsschallemissionssensorsignal, gegebenenfalls das dritte Trainingsschallemissionssensorsignal, gegebenenfalls das vierte Trainingsschallemissionssensorsignal und gegebenenfalls das fünfte Trainingsschallemissionssensorsignal eine Ankopplungsstärke des jeweiligen des wenigstens einen Schallemissionssensors an der jeweiligen Position auf der Testrohrleitung, insbesondere aussen auf der Testrohrleitung, d.h. an der ersten Position, an der zweiten Position, gegebenenfalls an der dritten Position, gegebenenfalls an der vierten Position bzw. gegebenenfalls an der fünften Position, beim Erfassen des jeweiligen Schallemissionssignals, welchem Schallemissionssignal das jeweilige Trainingsschallemissionssensorsignal entspricht.

Bevorzugt ist hierzu an der jeweiligen Position auf der Testrohrleitung, insbesondere aussen auf der Testrohrleitung, d.h. an der ersten Position, an der zweiten Position, gegebenenfalls an der dritten Position, gegebenenfalls an der vierten Position bzw. gegebenenfalls an der fünften Position, bevor mit demjenigen der wenigstens zwei Schallemissionssensoren, mit welchem an der jeweiligen Position auf der Testrohrleitung, insbesondere aussen auf der Testrohrleitung, das jeweilige Schallemissionssignal erfasst worden ist, der jeweilige Schallemissionssensor an der jeweiligen Position auf der Testrohrleitung, insbesondere aussen auf der Testrohrleitung, positioniert und eine akustische Ankopplung des jeweiligen Schallemissionssensors an die Testrohrleitung überprüft worden. Hierzu sind bevorzugt wenigstens zwei Schallemissionssensoren verwendet worden. Dabei ist bevorzugt zusätzlich dazu, dass der jeweilige der wenigstens zwei Schallemissionssensoren an der jeweiligen Position auf der Testrohrleitung, insbesondere aussen auf der Testrohrleitung, positioniert worden ist, ein weiterer der wenigstens zwei Schallemissionssensoren an einer zur jeweiligen Position benachbarten Position auf der Testrohrleitung, insbesondere aussen auf der Testrohrleitung, positioniert worden, wonach mit dem weiteren der wenigstens zwei Schallemissionssensoren das Testschallsignal ausgegeben, während mit demjenigen Schallemissionssensor, dessen akustische Ankopplung an die Testrohrleitung überprüft worden ist, das Testschallsignal erfasst worden. Aufgrund des vom jeweiligen Schallemissionssensor erfassten Testschallsignals ist anschliessend vorzugsweise eine Empfangsstärke und damit eine Ankopplungsstärke des vom jeweiligen Schallemissionssensor erfassten Testschallsignals ermittelt worden. Falls die ermittelte Empfangsstärke bzw. die Ankopplungsstärke unterhalb einer vorgegebenen minimalen Stärke lag, so ist der jeweilige Schallemissionssensor vorzugsweise erneut an der jeweiligen Position positioniert und seine akustische Ankopplung an die Testrohrleitung überprüft worden, bis die ermittelte Empfangsstärke bzw. Ankopplungsstärke mindestens der vorgegebenen minimalen Stärke entsprochen hat. Vorteilhafterweise ist erst wenn die für den jeweiligen Schallemissionssensor an der jeweiligen Position ermittelte Empfangsstärke bzw. Ankopplungsstärke mindestens der vorgegebenen minimalen Stärke entsprochen hat mit dem jeweiligen Schallemissionssensor das jeweilige Schallemissionssignal erfasst und vom jeweiligen Schallemissionssensor das dem jeweiligen erfassten Schallemissionssignal entsprechende Trainingsschallemissionssensorsignal ausgegeben worden.

Vorzugsweise beinhaltet jedes Trainingsdatenset ausserdem Informationen zum Aggregatszustand des Fluids und/oder zum Medium des Fluids, zu welchem die Trainingsschallemissionssensorsignale des jeweiligen Trainingsdatensets gehören.

Vorzugsweise beinhaltet jedes Trainingsdatenset ausserdem Informationen zum einem Druckunterschied, insbesondere Druckabfall, in der Testrohrleitung bzw. Rohrleitung, über das in die Testrohrleitung bzw. Rohrleitung eingebaute Testbauteil bzw. Bauteil mitberücksichtigt wird.

Dabei ist der Druckunterschied in der Testrohrleitung bzw. Rohrleitung über das in die Testrohrleitung bzw. Rohrleitung eingebaute Testbauteil bzw. Bauteil vorzugsweise ein Unterschied zwischen einem Druck, unter welchem das Fluid an einer ersten Stelle in der Testrohrleitung bzw. Rohrleitung vom Testbauteil bzw. Bauteil her gesehen entlang dem Flussweg entgegen der Flussleitrichtung gerade an das Testbauteil bzw. Bauteil anschliessend steht, und einem Druck, unter welchem das Fluid an einer zweiten Stelle in der Testrohrleitung bzw. Rohrleitung vom Testbauteil bzw. Bauteil her gesehen entlang dem Flussweg in die Flussleitrichtung gerade an das Testbauteil bzw. Bauteil anschliessend steht, mitberücksichtigt wird. Wenn das Testbauteil bzw. Bauteil ein Testventil bzw. Ventil ist, so handelt es sich beim Druckunterschied vorzugsweise in Flussleitrichtung gesehen um einen Druckabfall. Wenn das Testbauteil bzw. Bauteil hingegen eine Pumpe ist, so kann es sich beim Druckunterschied in Flussleitrichtung hingegen auch um eine Druckzunahme handeln. Vorzugsweise wird der Druckunterschied durch eine Druckmessung an der ersten Stelle und durch eine Druckmessung an der zweiten Stelle ermittelt, wobei die Differenz zwischen den beiden Druckmessungen der Druckunterschied ist.

Vorteilhafterweise beinhaltet jedes Trainingsdatenset ausserdem Informationen zum Testbauteil bzw. Bauteil, wobei die Informationen, wenn das Testbauteil bzw. Bauteil ein Testventil bzw. Ventil ist, Informationen zum Ventiltyp beinhalten.

Vorteilhafterweise beinhaltet jedes Trainingsdatenset ausserdem Informationen zu einer Grösse des Testbauteils bzw. Bauteils, insbesondere einen Innendurchmesser, wobei die Informationen, wenn das Testbauteil bzw. Bauteil ein Ventil bzw. Testventil ist, Informationen zu einer Nennweite des Ventils bzw. Testventils als Grösse des Testbauteils bzw. Bauteils beinhalten.

Vorzugsweise werden in den Trainingsdatensets jeweils die Trainingsschallemissionssensorsignale wie vorgehend für die Schallemissionssensorsignale beschrieben über einen Teilbereich des Frequenzbereichs, über welchen Frequenzbereich die Trainingsschallemissionssignale erfasst werden, ausgewertet, indem für diesen Teilbereich mindestens eine Kennzahl des jeweiligen Schallemissionssensorsignals ermittelt wird, wobei der jeweils resultierende Wert der Kennzahl als Bestandteil des jeweiligen Trainingsdatensets verwendet wird. Dabei kann entsprechend der vorgehend beschriebenen Bedingungen der Teilbereich verschoben werden.

Vorteilhafterweise umfassen die Trainingsdaten mindestens 40 Trainingsdatensets, bevorzugt mindestens 100 Trainingsdatensets, besonders bevorzugt mindestens 500 Trainingsdatensets. Vorzugsweise beinhalten die Trainingsdaten für jeden Zustand des Testbauteils bzw. Bauteils mindestens 40 Trainingsdatensets. Besonders bevorzugt beinhalten die Trainingsdaten für jedes Testbauteil bzw. Bauteil je für jeden Zustand mindestens 40 Trainingsdatensets. Ganz besonders bevorzugt beinhalten die Trainingsdaten für jedes Testbauteil bzw. Bauteil je für jeden Zustand jeweils je für jedes Medium mindestens 40 Trainingsdatensets.

Wie bereits erwähnt, wird das überwachte maschinelle Lernen bevorzugt durch Trainieren eines Algorithmus mit Trainingsdaten erreicht. Bevorzugt basiert dieser Algorithmus auf einem Random Forest-Ansatz oder einem individuell angepassten Neuralen Netzwerk (custom-designed Neural Network)-Ansatz. Alternativ kann der Algorithmus aber auch auf einem anderen Ansatz beruhen.

**Als erfindungsgemässe Lösung zu deklarieren!**

Erfindungsgemäss wird das vorgehend beschriebene Verfahren zum Erstellen einer Diagnose eines Bauteils in einem Verfahren zur Diagnose eines Bauteils verwendet. Hierbei handelt es sich um ein Verfahren zur Diagnose eines Bauteils, insbesondere eines Ventils, mittels Schallemissionsprüfung, welches Bauteil eingebaut ist in eine Rohrleitung, welche Rohrleitung zum Leiten eines Fluids entlang einem Flussweg in eine Flussleitrichtung ausgebildet ist. Dabei wird mit einem von wenigstens einem Schallemissionssensor an einer ersten Position auf der Rohrleitung, insbesondere aussen auf der Rohrleitung, das erste Schallemissionssignal erfasst und von demjenigen des wenigstens einen Schallemissionssensors, mit welchem an der ersten Position auf der Rohrleitung, insbesondere aussen auf der Rohrleitung, das erste Schallemissionssignal erfasst wird, das dem erfassten ersten Schallemissionssignal entsprechende erste Schallemissionssensorsignal ausgegeben wird. Weiter wird mit einem des wenigstens einen Schallemissionssensors an einer zweiten Position auf der Rohrleitung, insbesondere aussen auf der Rohrleitung, das zweites Schallemissionssignal erfasst und von demjenigen des wenigstens einen Schallemissionssensors, mit welchem an der zweiten Position auf der Rohrleitung, insbesondere aussen auf der Rohrleitung, das zweite Schallemissionssignal erfasst wird, das dem zweiten Schallemissionssignal entsprechende zweite Schallemissionssensorsignal ausgegeben wird, Dabei wird das erste Schallemissionssensorsignal an ein mit demjenigen des wenigstens einen Schallemissionssensors, mit welchem das erste Schallemissionssignal erfasst worden ist, verbundenes Diagnosemodul für das Erstellen der Diagnose des Bauteils übermittelt und das zweite Schallemissionssensorsignal an das mit demjenigen des wenigstens einen Schallemissionssensors, mit welchem das zweite Schallemissionssignal erfasst worden ist, verbundene Diagnosemodul für das Erstellen der Diagnose des Bauteils übermittelt und mittels dem Diagnosemodul unter Berücksichtigung des ersten Schallemissionssensorsignals und des zweiten Schallemissionssensorsignals die Diagnose des Bauteils mit dem vorgehend beschriebenen erfindungsgemässen Verfahren zum Erstellen einer Diagnose eines Bauteils erstellt.

Dabei kann der Schallemissionssensor, mittels welchem an einer zweiten Position auf der Rohrleitung, insbesondere aussen auf der Rohrleitung, das zweites Schallemissionssignal erfasst wird, der gleiche Schallemissionssensor sein, mit welchem an der ersten Position auf der Rohrleitung das erste Schallemissionssignal erfasst wird oder kann ein davon unterschiedlicher Schallemissionssensor sein.

Vorzugsweise ist das Diagnosemodul durch das vorgehend beschriebene Computerprogrammprodukt zur Durchführung des Verfahrens zum Erstellen einer Diagnose eines Bauteils mit dem Verfahren zum Erstellen einer Diagnose eines Bauteils gebildet.

Vorteilhafterweise wird mit einem des wenigstens einen Schallemissionssensors an der dritten Position auf der Rohrleitung, insbesondere aussen auf der Rohrleitung, das dritte Schallemissionssignal erfasst wird und von demjenigen des wenigstens einen Schallemissionssensors, mit welchem an der dritten Position auf der Rohrleitung, insbesondere aussen auf der Rohrleitung, das dritte Schallemissionssignal erfasst wird, das dem dritten Schallemissionssignal entsprechende dritte Schallemissionssensorsignal ausgegeben wird, wobei das dritte Schallemissionssensorsignal an das mit demjenigen des wenigstens einen Schallemissionssensors, mit welchem das dritte Schallemissionssignal erfasst worden ist, verbundene Diagnosemodul für das Erstellen der Diagnose des Bauteils übermittelt wird und mittels dem Diagnosemodul die Diagnose des Bauteils unter zusätzlicher Berücksichtigung des dritten Schallemissionssensorsignals mit dem Verfahren zum Erstellen einer Diagnose eines Bauteils erstellt wird.

Vorzugsweise wird mit einem des wenigstens einen Schallemissionssensors an der vierten Position auf der Rohrleitung, insbesondere aussen auf der Rohrleitung, das vierte Schallemissionssignal erfasst und von demjenigen des wenigstens einen Schallemissionssensors, mit welchem an der vierten Position auf der Rohrleitung, insbesondere aussen auf der Rohrleitung, das vierte Schallemissionssignal erfasst wird, das dem vierten Schallemissionssignal entsprechende vierte Schallemissionssensorsignal ausgegeben, wobei das vierte Schallemissionssensorsignal an das mit demjenigen des wenigstens einen Schallemissionssensors, mit welchem das vierte Schallemissionssignal erfasst worden ist, verbundene Diagnosemodul für das Erstellen der Diagnose des Bauteils übermittelt wird und mittels dem Diagnosemodul die Diagnose des Bauteils unter zusätzlicher Berücksichtigung des vierten Schallemissionssensorsignals mit dem erfindungsgemässen Verfahren zum Erstellen einer Diagnose eines Bauteils erstellt wird. Vorzugsweise wird mit einem des wenigstens einen Schallemissionssensors an der fünften Position auf der Rohrleitung, insbesondere aussen auf der Rohrleitung, das fünfte Schallemissionssignal erfasst und von demjenigen des wenigstens einen Schallemissionssensors, mit welchem an der fünften Position auf der Rohrleitung, insbesondere aussen auf der Rohrleitung, das fünfte Schallemissionssignal erfasst wird, das dem fünften Schallemissionssignal entsprechende fünfte Schallemissionssensorsignal ausgegeben, wobei das fünfte Schallemissionssensorsignal an das mit demjenigen des wenigstens einen Schallemissionssensors, mit welchem das fünfte Schallemissionssignal erfasst worden ist, verbundene Diagnosemodul für das Erstellen der Diagnose des Bauteils übermittelt wird und mittels dem Diagnosemodul die Diagnose des Bauteils unter zusätzlicher Berücksichtigung des fünften Schallemissionssensorsignals mit dem erfindungsgemässen Verfahren zum Erstellen einer Diagnose eines Bauteils erstellt wird.

Wenn das Bauteil ein Ventil ist, so mit einem von wenigstens einem Schallemissionssensor vorzugsweise das erste Schallemissionssignal und das zweite Schallemissionssignal sowie gegebenenfalls das dritte Schallemissionssignal, gegebenenfalls das vierte Schallemissionssignal und gegebenenfalls das fünfte Schallemissionssignal bei geschlossenem Ventil erfasst.

Vorteilhafterweise sind der wenigstens eine Schallemissionssensor wenigstens zwei Schallemissionssensoren. Vorteilhafterweise ist mit wenigstens einem der wenigstens zwei Schallemissionssensoren ein Testschallsignal, insbesondere innerhalb des Frequenzbereichs, über welchen Frequenzbereich mit den wenigstens zwei Schallemissionssensoren die Schallemissionssignale erfasst werden, ausgebbar. In einer besonders bevorzugten Variante weist das Testschallsignal eine Frequenz auf, welche einer Eigenfrequenz der wenigstens zwei Schallemissionssensoren entspricht. In einer Variante davon umfasst das Testschallsignal nur die der Eigenfrequenz der wenigstens zwei Schallemissionssensoren entsprechende Frequenz. Unabhängig davon, ob das Testschallsignal eine Frequenz aufweist, welche der Eigenfrequenz der wenigstens zwei Schallemissionssensoren entspricht oder nicht, weist das Testschallsignal in einer weiteren besonders bevorzugten Variante ein Frequenzspektrum auf, welches sich über den ganzen Frequenzbereich, über welchen Frequenzbereich mit den wenigstens zwei Schallemissionssensoren die Schallemissionssignale erfasst werden, erstreckt. Dabei kann das Frequenzspektrum ein kontinuierliches oder ein diskretes Frequenzspektrum sein.

Vorteilhafterweise wird an der jeweiligen Position auf der Rohrleitung, insbesondere aussen auf der Rohrleitung, d.h. an der ersten Position, an der zweiten Position, gegebenenfalls an der dritten Position, gegebenenfalls an der vierten Position bzw. gegebenenfalls an der fünften Position, bevor mit demjenigen der wenigstens zwei Schallemissionssensoren, mit welchem an der jeweiligen Position auf der Rohrleitung, insbesondere aussen auf der Rohrleitung, das jeweilige Schallemissionssignal erfasst wird, der jeweilige Schallemissionssensor an der jeweiligen Position auf der Rohrleitung, insbesondere aussen auf der Rohrleitung, positioniert und eine akustische Ankopplung des jeweiligen Schallemissionssensors an die Rohrleitung überprüft. Hierzu wird bevorzugt zusätzlich dazu, dass der jeweilige Schallemissionssensor an der jeweiligen Position auf der Rohrleitung, insbesondere aussen auf der Rohrleitung, positioniert wird, ein weiterer der wenigstens zwei Schallemissionssensoren an einer zur jeweiligen Position benachbarten Position auf der Rohrleitung, insbesondere aussen auf der Rohrleitung, positioniert, wonach mit dem weiteren der wenigstens zwei Schallemissionssensoren das Testschallsignal ausgegeben, während mit demjenigen Schallemissionssensor, dessen akustische Ankopplung an die Rohrleitung überprüft wird, das Testschallsignal erfasst wird. Aufgrund des vom jeweiligen Schallemissionssensor erfassten Testschallsignals wird anschliessend vorzugsweise eine Empfangsstärke und damit eine Ankopplungsstärke des vom jeweiligen Schallemissionssensor erfassten Testschallsignals ermittelt. Falls die ermittelte Empfangsstärke bzw. die Ankopplungsstärke unterhalb einer vorgegebenen minimalen Stärke liegt, so wird der jeweilige Schallemissionssensor vorzugsweise erneut an der jeweiligen Position positioniert und seine akustische Ankopplung an die Rohrleitung überprüft, bis die ermittelte Empfangsstärke bzw. Ankopplungsstärke mindestens der vorgegebenen minimalen Stärke entspricht. Vorteilhafterweise wird erst wenn die für den jeweiligen Schallemissionssensor an der jeweiligen Position ermittelte Empfangsstärke bzw. Ankopplungsstärke mindestens der vorgegebenen minimalen Stärke entspricht mit dem jeweiligen Schallemissionssensor das jeweilige Schallemissionssignal erfasst und vom jeweiligen Schallemissionssensor das dem jeweiligen erfassten Schallemissionssignal entsprechende Schallemissionssensorsignal ausgegeben. Dabei kann die Empfangsstärke bzw. Ankopplungsstärke ein skalarer Wert sein oder kann eine frequenzabhängige Funktion sein. D.h. im letzteren Fall kann die Empfangsstärke für jede Frequenz im Testschallsignal einen anderen Wert aufweisen. Alternativ zu diesen Varianten mit wenigstens zwei Schallemissionssensoren handelt es sich jedoch bei dem wenigstens einen Schallemissionssensor um einen einzigen Schallemissionssensor.

Erfindungsgemäss umfasst eine Anordnung zur Durchführung des Verfahrens zur Diagnose eines Bauteils, insbesondere eines Ventils, mittels Schallemissionsprüfung, welches Bauteil eingebaut ist in eine Rohrleitung, welche Rohrleitung zum Leiten eines Fluids entlang einem Flussweg in eine Flussleitrichtung ausgebildet ist, wenigstens einen Schallemissionssensor zum Erfassen eines ersten Schallemissionssignals an einer ersten Position auf einer Rohrleitung, insbesondere aussen auf der Rohrleitung, und Ausgeben eines ersten Schallemissionssensorsignals, wobei das erste Schallemissionssensorsignal dem erfassten ersten Schallemissionssignal entspricht, zum Erfassen eines zweiten Schallemissionssignals an einer zweiten Position auf der Rohrleitung, insbesondere aussen auf der Rohrleitung, und Ausgeben eines zweiten Schallemissionssensorsignals, wobei das zweite Schallemissionssensorsignal dem erfassten zweiten Schallemissionssignal entspricht, gegebenenfalls eines dritten Schallemissionssignals an einer dritten Position auf der Rohrleitung, insbesondere aussen auf der Rohrleitung, und Ausgeben eines dritten Schallemissionssensorsignals, wobei das dritte Schallemissionssensorsignal dem erfassten dritten Schallemissionssignal entspricht, gegebenenfalls eines vierten Schallemissionssignals an einer vierten Position auf der Rohrleitung, insbesondere aussen auf der Rohrleitung, und Ausgeben eines dritten Schallemissionssensorsignals, wobei das vierte Schallemissionssensorsignal dem erfassten vierten Schallemissionssignal entspricht, gegebenenfalls eines fünften Schallemissionssignals an einer fünften Position auf der Rohrleitung, insbesondere aussen auf der Rohrleitung, und Ausgeben eines fünften Schallemissionssensorsignals, wobei das fünfte Schallemissionssensorsignal dem erfassten fünften Schallemissionssignal entspricht, und eine Diagnoseeinheit mit dem Diagnosemodul für das Erstellen der Diagnose des Bauteils unter Berücksichtigung des ersten Schallemissionssensorsignals und des zweiten Schallemissionssensorsignals die Diagnose des Bauteils mit dem Verfahren nach einem der Ansprüche 1 bis 12, wobei die Diagnoseeinheit mit dem Diagnosemodul zum Empfangen des ersten Schallemissionssensorsignals mit demjenigen des wenigstens einen Schallemissionssensors verbunden ist, mit welchem das erste Schallemissionssignal zu erfassen ist, und zum Empfangen des zweiten Schallemissionssensorsignals mit demjenigen des wenigstens einen Schallemissionssensors verbunden ist, mit welchem das zweite Schallemissionssignal zu erfassen ist, sowie gegebenenfalls zum Empfangen des dritten Schallemissionssensorsignals mit demjenigen des wenigstens einen Schallemissionssensors verbunden ist, mit welchem das dritten Schallemissionssignal zu erfassen ist, gegebenenfalls zum Empfangen des vierten Schallemissionssensorsignals mit demjenigen des wenigstens einen Schallemissionssensors verbunden ist, mit welchem das vierte Schallemissionssignal zu erfassen ist, und gegebenenfalls zum Empfangen des fünften Schallemissionssensorsignals mit demjenigen des wenigstens einen Schallemissionssensors verbunden ist, mit welchem das fünfte Schallemissionssignal zu erfassen ist.

Die Diagnoseeinheit kann dabei beispielsweise durch ein Smartphone gebildet sein, auf welcher das Diagnosemodul in der Form eines Computerprogrammprodukts installiert ist.

Dies hat den Vorteil, dass die Diagnoseeinheit ohne grossen Aufwand zum Ort des Bauteils gebracht werden kann, für welches Bauteil die Diagnose erstellt werden soll. Die Diagnoseeinheit kann aber auch durch eine andere Rechnereinheit wie beispielsweise einen Personalcomputer gebildet sein, auf welchem das Diagnosemodul in der Form eines Computerprogrammprodukts installiert ist. Die Diagnoseeinheit kann aber auch durch mehrere Computer gebildet sein und somit beispielsweise durch eine Cloud gebildet sein, auf welcher das Diagnosemodul in der Form eines Computerprogrammprodukts installiert ist.

Vorzugsweise weist der wenigstens eine Schallemissionssensor einen Magneten zum Anbringen des wenigstens einen Schallemissionssensors auf der Rohrleitung, insbesondere aussen auf der Rohrleitung, und zum Festhalten des wenigstens einen Schallemissionssensors an der Rohrleitung auf. Dies hat den Vorteil, dass der wenigstens eine Schallemissionssensor auf einfache Art und Weise mit einer reproduzierbaren Kraft auf der Rohrleitung, insbesondere aussen auf der Rohrleitung, angebracht werden kann. Alternativ dazu besteht aber auch die Möglichkeit, dass der wenigstens eine Schallemissionssensor keinen Magneten zum Anbringen des wenigstens einen Schallemissionssensors auf der Rohrleitung und zum Festhalten des wenigstens einen Schallemissionssensors an der Rohrleitung aufweist. So kann der wenigstens eine Schallemissionssensor beispielsweise einfach von Hand auf der Rohrleitung angebracht und festgehalten werden.

Bevorzugt umfasst die Anordnung wenigstens zwei Schallemissionssensoren. Dies hat den Vorteil, dass die Ankopplungsstärke der Schallemissionssensoren wie vorgehend beschrieben auf einfache und zuverlässige Art und Weise ermittelt und für die Diagnose des Bauteils verwendet werden kann. Alternativ dazu besteht aber auch die Möglichkeit, dass die Anordnung nur einen Schallemissionssensor umfasst.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1   eine vereinfachte schematische Darstellung einer Anordnung zur Durchführung eines erfindungsgemässen Verfahrens zur Diagnose eines Bauteils, insbesondere eines Ventils, mittels Schallemissionsprüfung, welches Bauteil eingebaut ist in eine Rohrleitung, welche Rohrleitung zum Leiten eines Fluids entlang einem Flussweg in eine Flussleitrichtung ausgebildet ist,

Fig. 2   Kurven eines ersten Schallemissionssensorsignals, eines zweiten Schallemissionssensorsignals sowie eines dritten Schallemissionssensorsignals über den Frequenzbereich von 25 kHz bis 350 kHz einer ersten Messung für das Erstellen eine Diagnose eines Ventils,

Fig. 3 Kurven des ersten Schallemissionssensorsignals, des zweiten Schallemissionssensorsignals sowie des dritten Schallemissionssensorsignals über den Frequenzbereich von 25 kHz bis 350 kHz einer zweiten Messung für das Erstellen eine Diagnose des Ventils,

Fig. 4 Kurven des ersten Schallemissionssensorsignals, des zweiten Schallemissionssensorsignals sowie des dritten Schallemissionssensorsignals über den Frequenzbereich von 25 kHz bis 350 kHz einer dritten Messung für das Erstellen eine Diagnose des Ventils,

Fig. 5 Kurven des ersten Schallemissionssensorsignals, des zweiten Schallemissionssensorsignals sowie des dritten Schallemissionssensorsignals über den Frequenzbereich von 25 kHz bis 350 kHz einer vierten Messung für das Erstellen eine Diagnose eines weiteren Ventils, und

Fig. 6 Kurven des ersten Schallemissionssensorsignals, des zweiten Schallemissionssensorsignals sowie des dritten Schallemissionssensorsignals über den Frequenzbereich von 25 kHz bis 350 kHz einer fünften Messung für das Erstellen eine Diagnose eines weiteren Ventils.

Grundsätzlich sind in den Figuren gleiche Teile mit gleichen Bezugszeichen versehen.

## Wege zur Ausführung der Erfindung

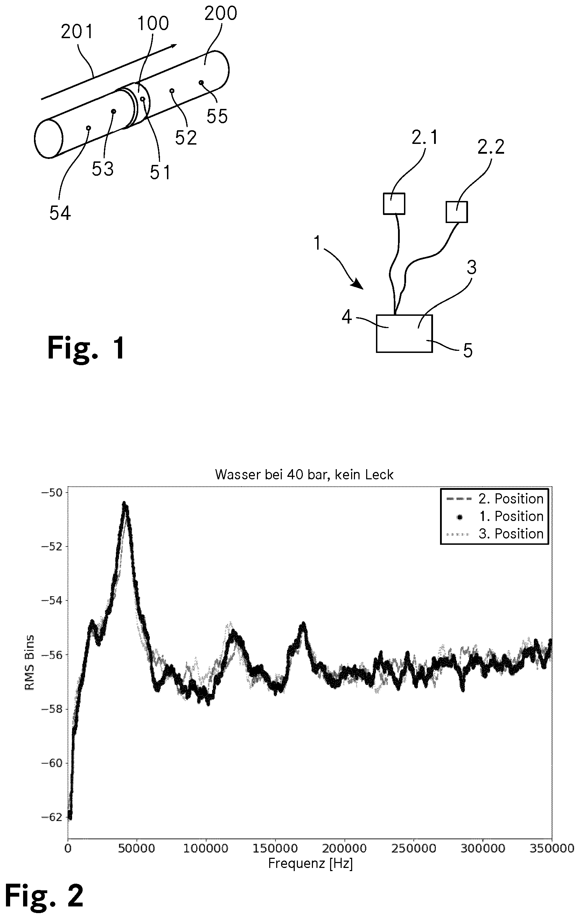

Die Figur 1 zeigt eine vereinfachte schematische Darstellung einer Anordnung 1 zur Durchführung eines erfindungsgemässen Verfahrens zur Diagnose eines Bauteils 100, insbesondere eines Ventils, mittels Schallemissionsprüfung, welches Bauteil 100 eingebaut ist in eine Rohrleitung 200, welche Rohrleitung 200 zum Leiten eines Fluids entlang einem Flussweg in eine Flussleitrichtung 201 ausgebildet ist. Die Anordnung 1 umfasst zwei Schallemissionssensoren 2.1, 2.2 zum Erfassen von Schallemissionssignalen in einem Frequenzbereich von 25 kHz bis 350 kHz und ausgeben von Schallemissionssensorsignalen, welche jeweils dem jeweiligen erfassten Schallemissionssignal entsprechen. In Varianten besteht auch die Möglichkeit, dass mit den beiden Schallemissionssensoren 2.1, 2.2 das jeweilige Schallemissionssignal nicht über den vorgehend angegebenen Frequenzbereich von 25 kHz bis 350 kHz, sondern über einen Frequenzbereich von etwa 1 kHz bis etwa 1 MHz, von 1 kHz bis 1 MHz, 25 kHz bis 500 kHz, oder von 25 kHz bis 300 kHz erfasst werden kann. Dabei decken auch die vom jeweiligen Schallemissionssensor ausgegebenen Schallemissionssignale den der jeweiligen Variante entsprechenden Frequenzbereich von etwa 1 kHz bis etwa 1 MHz, von 1 kHz bis 1 MHz, bzw. von 25 kHz bis 500 kHz, bzw. von 25 kHz bis 350 kHz, bzw. von 25 kHz bis 300 kHz ab.

Die zwei Schallemissionssensoren 2.1, 2.2 weisen je einen Magneten zum Anbringen des wenigstens jeweiligen Schallemissionssensors 2.1, 2.2 aussen auf der Rohrleitung 200 und zum Festhalten des jeweiligen Schallemissionssensors 2.1, 2.2 an der Rohrleitung 200 auf. Mit beiden Schallemissionssensoren 2.1, 2.2 ist zudem ein Testschallsignal bei 50 kHz ausgebbar, was eine Eigenfrequenz der Schallemissionssensoren 2.1, 2.2 ist. Das Testschallsignal kann aber auch eine oder mehrere andere Frequenzen als 50 kHz aufweisen. So kann das Testschallsignal beispielsweise im Bereich von 1 kHz bis 1 MHz, im Bereich von 20 kHz bis 500 kHz, oder im Bereich von 50 kHz - 200 kHz liegen.

Die Anordnung 1 umfasst somit wenigstens einen Schallemissionssensor 2.1, 2.2 zum Erfassen eines ersten Schallemissionssignals an einer ersten Position 51 auf der Rohrleitung 200 und Ausgeben eines ersten Schallemissionssensorsignals, wobei das erste Schallemissionssensorsignal dem erfassten ersten Schallemissionssignal entspricht, zum Erfassen eines zweiten Schallemissionssignals an einer zweiten Position 52 auf der Rohrleitung 200 und Ausgeben eines zweiten Schallemissionssensorsignals, wobei das zweite Schallemissionssensorsignal dem erfassten zweiten Schallemissionssignal entspricht, zum Erfassen eines dritten Schallemissionssignals an einer dritten Position 53 auf der Rohrleitung 200 und Ausgeben eines dritten Schallemissionssensorsignals, wobei das dritte Schallemissionssensorsignal dem erfassten dritten Schallemissionssignal entspricht, zum Erfassen eines vierten Schallemissionssignals an einer vierten Position 54 auf der Rohrleitung 200 und Ausgeben eines vierten Schallemissionssensorsignals, wobei das vierte Schallemissionssensorsignal dem erfassten vierten Schallemissionssignal entspricht, und zum Erfassen eines fünften Schallemissionssignals an einer fünften Position 55 auf der Rohrleitung 200 und Ausgeben eines fünften Schallemissionssensorsignals, wobei das fünfte Schallemissionssensorsignal dem erfassten fünften Schallemissionssignal entspricht. Weiter umfasst die Anordnung 1 eine Diagnoseeinheit 3 mit dem Diagnosemodul 4 für das Erstellen der Diagnose des Bauteils 100 unter Berücksichtigung des ersten Schallemissionssensorsignals und des zweiten Schallemissionssensorsignals mit dem erfindungsgemässen Verfahren zum Erstellen einer Diagnose des Bauteils 100. Dabei ist die Diagnoseeinheit 3 mit dem Diagnosemodul 4 mit den Schallemissionssensoren 2.1, 2.2 verbunden, um die von den Schallemissionssensoren 2.1, 2.2 ausgegebenen Schallemissionssensorsignale zu empfangen. Damit ist die Diagnoseeinheit 3 mit dem Diagnosemodul 4 zum Empfangen des ersten Schallemissionssensorsignals mit demjenigen des wenigstens einen Schallemissionssensors 2.1, 2.2 verbunden, mit welchem das erste Schallemissionssignal zu erfassen ist, zum Empfangen des zweiten Schallemissionssensorsignals mit demjenigen des wenigstens einen Schallemissionssensors 2.1, 2.2 verbunden, mit welchem das zweite Schallemissionssignal zu erfassen ist, zum Empfangen des dritten Schallemissionssensorsignals mit demjenigen des wenigstens einen Schallemissionssensors 2.1, 2.2 verbunden, mit welchem das dritte Schallemissionssignal zu erfassen ist, zum Empfangen des vierten Schallemissionssensorsignals mit demjenigen des wenigstens einen Schallemissionssensors 2.1, 2.2 verbunden, mit welchem das vierte Schallemissionssignal zu erfassen ist, und zum Empfangen des fünften Schallemissionssensorsignals mit demjenigen des wenigstens einen Schallemissionssensors 2.1, 2.2 verbunden, mit welchem das fünfte Schallemissionssignal zu erfassen ist.

Im vorliegenden Ausführungsbeispiel ist die Diagnoseeinheit 3 ein Smartphone, auf welcher das Diagnosemodul 4 in der Form eines Computerprogrammprodukts 5 installiert ist. In einer Variante davon ist die Diagnoseeinheit 3 hingegen durch eine andere Rechnereinheit wie beispielsweise einen Personalcomputer gebildet, auf welchem das Diagnosemodul 4 in der Form eines Computerprogrammprodukts 5 installiert ist. Die Diagnoseeinheit 3 kann aber auch durch mehrere Computer gebildet sein und somit beispielsweise durch eine Cloud gebildet sein, auf welcher das Diagnosemodul 4 in der Form eines Computerprogrammprodukts 5 installiert ist.

Wenn mit der Anordnung 1 das erfindungsgemässe Verfahren zur Diagnose eines Bauteils 100, insbesondere eines Ventils, mittels Schallemissionsprüfung, durchgeführt wird, so wird in einer Ausführungsform mit einem der Schallemissionssensoren 2.1, 2.2 an der ersten Position 51 aussen auf der Rohrleitung 200 das erste Schallemissionssignal erfasst und von demjenigen des wenigstens einen Schallemissionssensors 2.1, 2.2, mit welchem an der ersten Position 51 auf der Rohrleitung 200 das erste Schallemissionssignal erfasst wird, das dem erfassten ersten Schallemissionssignal entsprechende erste Schallemissionssensorsignal ausgegeben. Weiter wird mit einem des wenigstens einen Schallemissionssensors 2.1, 2.2 an der zweiten Position 52 aussen auf der Rohrleitung 200 das zweites Schallemissionssignal erfasst und von demjenigen des wenigstens einen Schallemissionssensors 2.1, 2.2, mit welchem an der zweiten Position 52 auf der Rohrleitung 200 das zweite Schallemissionssignal erfasst wird, das dem zweiten Schallemissionssignal entsprechende zweite Schallemissionssensorsignal ausgegeben. Ausserdem wird mit einem des wenigstens einen Schallemissionssensors 2.1, 2.2 an der dritte Position 53 aussen auf der Rohrleitung 200 das dritte Schallemissionssignal erfasst und von demjenigen des wenigstens einen Schallemissionssensors 2.1, 2.2, mit welchem an der dritten Position 53 auf der Rohrleitung 200 das dritte Schallemissionssignal erfasst wird, das dem dritten Schallemissionssignal entsprechende dritte Schallemissionssensorsignal ausgegeben. Weiter wird mit einem des wenigstens einen Schallemissionssensors 2.1, 2.2 an der vierten Position 54 aussen auf der Rohrleitung 200 das vierte Schallemissionssignal erfasst und von demjenigen des wenigstens einen Schallemissionssensors 2.1, 2.2, mit welchem an der vierten Position 54 auf der Rohrleitung 200 das vierte Schallemissionssignal erfasst wird, das dem vierten Schallemissionssignal entsprechende vierte Schallemissionssensorsignal ausgegeben. Ausserdem wird mit einem des wenigstens einen Schallemissionssensors 2.1, 2.2 an der fünften Position 55 aussen auf der Rohrleitung 200 das fünfte Schallemissionssignal erfasst und von demjenigen des wenigstens einen Schallemissionssensors 2.1, 2.2, mit welchem an der fünften Position 55 auf der Rohrleitung 200 das fünfte Schallemissionssignal erfasst wird, das dem fünften Schallemissionssignal entsprechende fünfte Schallemissionssensorsignal ausgegeben.

Bevor dabei an jeder der Positionen 51, 52, 53, 54, 55 das jeweilige Schallemissionssignal mit dem jeweiligen des wenigstens einen Schallemissionssensors 2.1, 2.2 erfasst wird, wird an der jeweiligen Position 51, 52, 53, 54, 55 aussen auf der Rohrleitung 200 mit demjenigen Schallemissionssensor 2.1, 2.2, mit welchem an der jeweiligen Position 51, 52, 53, 54, 55 aussen auf der Rohrleitung 200 das jeweilige Schallemissionssignal erfasst wird, der jeweilige Schallemissionssensor 2.1, 2.2 an der jeweiligen Position 51, 52, 53, 54, 55 aussen auf der Rohrleitung 200 positioniert und eine akustische Ankopplung des jeweiligen Schallemissionssensors 2.1, 2.2 an die Rohrleitung 200 überprüft. Hierzu wird zusätzlich dazu, dass der jeweilige Schallemissionssensor 2.1, 2.2 an der jeweiligen Position 51, 52, 53, 54, 55 aussen auf der Rohrleitung 200 positioniert wird, der andere Schallemissionssensor 2.2, 2.1 an einer zur jeweiligen Position 51, 52, 53, 54, 55 benachbarten Position aussen auf der Rohrleitung 200 positioniert, wonach mit dem anderen Schallemissionssensor 2.2, 2.1 das Testschallsignal ausgegeben wird, während mit demjenigen Schallemissionssensor 2.1, 2.2, dessen akustische Ankopplung an die Rohrleitung 200 überprüft wird, das Testschallsignal erfasst wird. Aufgrund des vom jeweiligen Schallemissionssensor 2.1, 2.2 erfassten Testschallsignals wird anschliessend eine Empfangsstärke und damit eine Ankopplungsstärke des vom jeweiligen Schallemissionssensor 2.1, 2.2 erfassten Testschallsignals ermittelt. Falls die ermittelte Empfangsstärke bzw. die Ankopplungsstärke unterhalb einer vorgegebenen minimalen Stärke liegt, so wird der jeweilige Schallemissionssensor 2.1, 2.2 erneut an der jeweiligen Position 51, 52, 53, 54, 55 positioniert und seine akustische Ankopplung an die Rohrleitung 200 überprüft, bis die ermittelte Empfangsstärke bzw. Ankopplungsstärke mindestens der vorgegebenen minimalen Stärke entspricht. Erst wenn die für den jeweiligen Schallemissionssensor 2.1, 2.2 an der jeweiligen Position 51, 52, 53, 54, 55 ermittelte Empfangsstärke bzw. Ankopplungsstärke mindestens der vorgegebenen minimalen Stärke entspricht wird mit dem jeweiligen Schallemissionssensor 2.1, 2.2 das jeweilige Schallemissionssignal erfasst und vom jeweiligen Schallemissionssensor 2.1, 2.2 das dem jeweiligen erfassten Schallemissionssignal entsprechende Schallemissionssensorsignal ausgegeben. Im vorliegenden Ausführungsbeispiel ist die Empfangsstärke bzw. Ankopplungsstärke ein skalarer Wert. Ein einer Variante dazu kann die Empfangsstärke bzw. Ankopplungsstärke aber auch eine frequenzabhängige Funktion sein. D.h. die Empfangsstärke kann für jede Frequenz im Testschallsignal einen anderen Wert aufweisen. Unabhängig davon wird die Ankopplungsstärke jeweils für das Erstellen der Diagnose des Bauteils 100 mitberücksichtigt.

Wenn mit dem jeweiligen Schallemissionssensor 2.1, 2.2 das jeweilige Schallemissionssignal an der jeweiligen Positionen 51, 52, 53, 54, 55 erfasst und vom jeweiligen Schallemissionssensor 2.1, 2.2 das dem jeweiligen erfassten Schallemissionssignal entsprechende Schallemissionssensorsignal ausgegeben wird, so wird das jeweilige Schallemissionssignal mit dem jeweiligen des wenigstens einen Schallemissionssensors 2.1, 2.2 kontinuierlich während einer Zeitdauer 2 s, erfasst.

Die ausgegebenen Schallemissionssensorsignale werden jeweils an die Diagnoseeinheit 3 mit dem Diagnosemodul 4 ermittelt und mit dem Diagnosemodul 4 wird mit dem erfindungsgemässen Verfahren zum Erstellen einer Diagnose eines Bauteils, insbesondere eines Ventils, mittels Schallemissionsprüfung, welches Bauteil eingebaut ist in die Rohrleitung, welche Rohrleitung zum Leiten eines Fluids entlang einem Flussweg in eine Flussleitrichtung ausgebildet ist, die Diagnose des Bauteils 100 erstellt.

Im vorliegenden Ausführungsbeispiel befindet die zweite Position 52 von der ersten Position 51 in die Flussleitrichtung von der ersten Position 51 beabstandet auf der Rohrleitung 200. Weiter befindet sich entlang dem Flussweg betrachtet die dritte Position 53 auf einer anderen Seite von der ersten Position 51 als sich die zweite Position 52 von der ersten Position 51 befindet, womit sich die erste Position 51 entlang dem Flussweg betrachtet zwischen der zweiten Position 52 und der dritten Position 53 befindet. Zudem befindet sich entlang dem Flussweg betrachtet die vierte Position 54 auf einer anderen Seite von der dritten Position 53 als sich die erste Position 51 von der dritten Position 53 befindet, womit sich die dritte Position 53 entlang dem Flussweg betrachtet zwischen der ersten Position 51 und der vierten Position 54 befindet Ausserdem befindet sich entlang dem Flussweg betrachtet die fünfte Position 55 auf einer anderen Seite von der ersten Position 51 als sich die dritte Position 53 von der ersten Position 51 befindet, womit sich die erste Position 51 entlang dem Flussweg betrachtet zwischen der dritten Position 53 und der fünften Position 55 befindet. Zudem befindet sich entlang dem Flussweg betrachtet die fünfte Position 55 auf einer anderen Seite von der zweiten Position 52 befindet als sich die dritte Position 53 von der zweiten Position 52 befindet, womit sich die zweite Position 52 entlang dem Flussweg betrachtet zwischen der dritten Position 53 und der fünften Position 55 befindet.

Für das Erstellen der Diagnose des Bauteils 100 werden das erste Schallemissionssensorsignal, das zweite Schallemissionssensorsignal, das dritte Schallemissionssensorsignal, das vierte Schallemissionssensorsignal und das fünfte Schallemissionssensorsignal mitberücksichtigt. In einer Variante dazu werde für das Erstellen der Diagnose des Bauteils 100 hingegen nur das erste Schallemissionssensorsignal, das zweite Schallemissionssensorsignal, das dritte Schallemissionssensorsignal und das vierte Schallemissionssensorsignal mitberücksichtigt. In einer weiteren Variante dazu werde für das Erstellen der Diagnose des Bauteils 100 hingegen nur das erste Schallemissionssensorsignal, das zweite Schallemissionssensorsignal und das dritte Schallemissionssensorsignal mitberücksichtigt. In einer weiteren Variante dazu werde für das Erstellen der Diagnose des Bauteils 100 hingegen nur das erste Schallemissionssensorsignal und das zweite Schallemissionssensorsignal.

Nachfolgend wird im Zusammenhang mit den weiteren Figuren das erfindungsgemässe Verfahren zum Erstellen einer Diagnose eines Bauteils erläutert. Dabei wird als Ausführungsbeispiel eine Variante erläutert, in welcher nur das erste Schallemissionssignal an der ersten Position 51 aussen auf der Rohrleitung 200, das zweite Schallemissionssignal an der zweite Position 52 aussen auf der Rohrleitung 200 sowie das dritte Schallemissionssignal an der dritten Position 53 aussen auf der Rohrleitung 200 erfasst worden ist. Daher werden in diesem Ausführungsbeispiel für das Erstellen der Diagnose des Bauteils 100 nur das erste Schallemissionssensorsignal, das zweite Schallemissionssensorsignal und das dritte Schallemissionssensorsignal mitberücksichtigt. Das vorgehend erläuterte vierte Schallemissionssensorsignal sowie fünfte Schallemissionssensorsignal werden hingegen nicht mitberücksichtigt, da sie gar nicht aufgenommen worden sind.

In der Figur 2 sind je Kurven des ersten Schallemissionssensorsignals, des zweiten Schallemissionssensorsignals sowie des dritten Schallemissionssensorsignals über den Frequenzbereich von 25 kHz bis 350 kHz abgebildet, welche dem an der ersten Position 51 erfassten ersten Schallemissionssignal, dem an der zweiten Position 52 erfassten zweiten Schallemissionssignal bzw. dem an der dritten Position 53 erfassten Schallemissionssignal entsprechen. Die Rohrleitung 200 wies einen Innendurchmesser von 25 mm auf und das eingebaute Bauteil 100 war ein Ventil, genauer genommen ein Kugelhahn-Ventil (in Englisch "ball valve") mit einem Ventilinnendurchmesser von 25 mm. Das Fluid in der Rohrleitung 200 war flüssiges Wasser und Stand oberhalb des Ventils, d.h. vom Ventil her gesehen entgegen der Flussleitrichtung 201, unter einem Druck von 40 bar, während unterhalb des Ventils, d.h. vom Ventil her gesehen in die Flussleitrichtung, Atmosphäredruck, d.h. ein Druck von 1 bar herrschte. Somit bestand über des Ventil ein Druckabfall von 39 bar. Das geschlossene Ventil war intakt, d.h. dicht.

Bei den in der Figur 2 abgebildeten Kurven handelt es sich jeweils um das fortlaufende Quadratische

$$RMS = \sqrt{\frac{1}{t_2-t_1}\int_{t_1}^{t_2} f(t)^2 dt}$$

Mittel nach der Formel der Fast Fourier Transformation des jeweiligen Schallemissionsensorsignals, wobei $t_2 - t_1$ jeweils der Breite eines Bins in der Kurve entspricht, dabei sind die Schallemissionsensorsignale jeweils mit der Ankopplungsstärke des Schallemissionsensors 2.1, 2.2, mit welchem das jeweilige Schallemissionssignal erfasst worden ist, korrigiert, sodass sie miteinander vergleichbar sind.

Wie aus der Figur 2 ersichtlich ist, weisen die Kurven der drei Schallemissionsensorsignale sehr ähnliche Verläufe auf. Dies deutet bereits bei einer visuellen Einschätzung der Kurven darauf hin, dass das Bauteil 100 intakt bzw. das Ventil dicht ist und dass keine oder nur geringe Störgeräusche von Quellen von ausserhalb des Bereichs von der zweiten Position 52 zur dritten Position 53 in der Rohrleitung 200 mit erfasst wurden. Da es sich bei der Rohrleitung 200, an welcher die gezeigten Messungen aufgenommen wurden, um eine Testrohrleitung handelte, konnte auch das Ventil auch unmittelbar auf seine Dichtheit überprüft werden und sichergestellt werden, dass diese Schallemissionsensorsignale von der Rohrleitung mit einem dichten Ventil stammen.

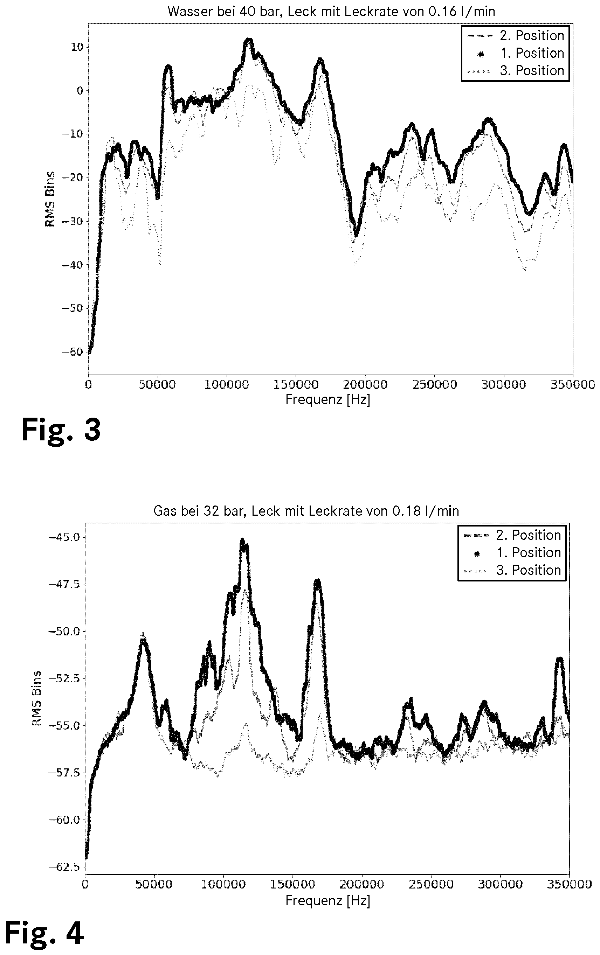

In der Figur 3 sind analog zu den in Figur 2 gezeigten Kurven die Kurven des ersten Schallemissionsensorsignals, des zweiten Schallemissionsensorsignals und des dritten Schallemissionsensorsignals gezeigt, wobei in Figur 3 aber bei der gleichen Rohrleitung das geschlossene Kugelhahn-Ventil bei dem Wasserdruck von 40 bar eine Leckagerate von 0.16 l/min aufgewiesen hat. Wie ersichtlich ist, weist die Kurve des ersten Schallemissionsensorsignals, welches an der ersten Position 51 beim Ventil aufgenommen worden ist, fast durchgehend die höchsten RMS-Werte auf, während die Kurve des zweiten Schallemissionsensorsignals, welches von der ersten Position 51 her gesehen in Flussleitrichtung an der zweiten Position 52 aufgenommen worden ist, unterhalb von 200 kHz einen recht ähnlichen Verlauf wie die Kurve des ersten Schallemissionsensorsignals aufweist und oberhalb von 200 kHz etwas geringere RMS-Werte als die Kurve des ersten Schallemissionsensorsignals aufweist. Die Kurve des dritten Schallemissionsensorsignals, welches von der ersten Position 51 her gesehen entgegen der Flussleitrichtung an der dritten Position 53 aufgenommen worden ist, weist hingegen fast durchgehend geringere RMS-Werte als die Kurven des ersten und des zweiten Schallemissionsensorsignals auf. Dies deutet auf ein Leck im Ventil hin.

In der Figur 4 sind analog zu den in den Figuren 2 und 3 gezeigten Kurven die Kurven des ersten Schallemissionsensorsignals, des zweiten Schallemissionsensorsignals und des dritten Schallemissionsensorsignals gezeigt, wobei in Figur 4 aber das Fluid ein Gas bei einem Druck von 32 bar war und das geschlossene Kugelhahn-Ventil ein Leck mit eine Leckagerate von 0.18 l/min aufgewiesen hat. Hier zeigen sich primär im Teilbereich von 50 kHz bis 180 kHz die unterschiedlichen Verläufe der Kurven, während die Kurven ausserhalb des Teilbereichs weitgehend ähnlich verlaufen. Innerhalb des Teilbereichs weist die Kurve des ersten Schallemissionsensorsignals, welches an der ersten Position 51 beim Ventil aufgenommen worden ist, fast durchgehend die höchsten RMS-Werte auf, während die Kurve des zweiten Schallemissionsensorsignals, welches von der ersten Position 51 her gesehen in Flussleitrichtung an der zweiten Position 52 aufgenommen worden ist, geringere RMS-Werte als die Kurve des ersten Schallemissionsensorsignals aufweist. Die Kurve des dritten Schallemissionsensorsignals, welches von der ersten Position 51 her gesehen entgegen der Flussleitrichtung an der dritten Position 53 aufgenommen worden ist, weist hingegen durchgehend geringere RMS-Werte als die Kurven des ersten und des zweiten Schallemissionsensorsignals auf. Dies deutet auf ein Leck im Ventil hin.

Dabei wird aber darauf hingewiesen, dass die Kurven in Figur 4 auch in den Teilbereichen von 220 kHz bis 250 kHz und von 270 kHz bis 300 kHz diese unterschiedlichen Verläufe, wenn auch in deutlich geringerem Ausmass, zeigen, welche auf ein Leck im Ventil anzeigen. Somit bietet sich hier am in Figur 4 gezeigten Bespiel für die Auswertung der Schallemissionsensorsignale zur Diagnose des Ventils primär der Teilbereich von 50 kHz bis 180 kHz an. Falls dieser Teilbereich mit Störgeräuschen überlagert sein sollte, kann hier für die Auswertung aber auch auf einen oder beide Teilbereiche von 220 kHz bis 250 kHz bzw. von 270 kHz bis 300 kHz ausgewichen werden. Wie dies im Rahmen des erfindungsgemässen Verfahrens zum Erstellen einer Diagnose eines Bauteils erfolgt, ist nachfolgend beschrieben:

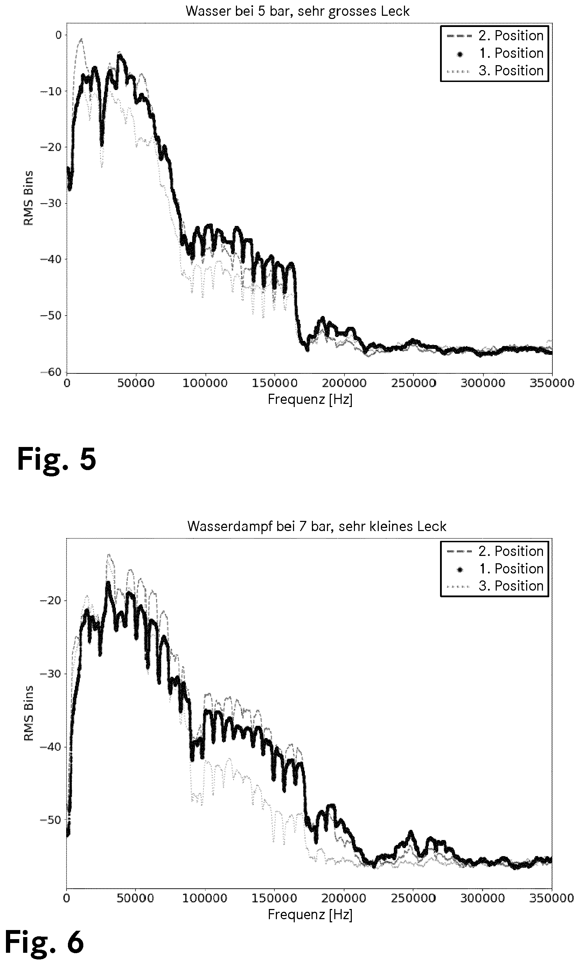

In der Figur 5 sind wiederum RMS-Kurven des ersten Schallemissionsensorsignals, des zweiten Schallemissionsensorsignals und des dritten Schallemissionsensorsignals gezeigt, wobei in Figur 5 das Fluid Wasser bei einem Druck oberhalb des Ventils von 5 bar war und die Rohrleitung 200 einen Innendurchmesser von 25 mm aufwies, wobei aber das Ventil ein Durchgangsventil (in Englisch "globe valve") mit einem Ventildurchmesser von 25 mm aufgewiesen hat. Entgegen der vorgehenden Beispiele wurden hier die Schallemissionssignale an einer Rohrleitung 200 in einem Produktionsbetrieb aufgenommen. Daher konnte die exakte Leckagerate nicht bestimmt werden. Es war jedoch bekannt und konnte mit dem erfindungsgemässen Verfahren bestimmt werden, dass das Ventil ein grosses Leck aufwies. Dabei konnte festgestellt werden, dass vom Ventil her gesehen in Flussleitrichtung 201 hinter der zweiten Position 52 eine Quelle von starken Störgeräuschen mit einer Frequenz von etwa 10 kHz vorhanden war.

Da es sich beim Fluid um flüssiges Wasser bei Raumtemperatur gehandelt hat, das Bauteil 100 bzw. Ventil ein Durchgangsventil war und der Druckabfall über das Ventil 4 bar betragen hat, wurde für das Erstellen der Diagnose in einem ersten Schritt von 25 kHz bis 50 kHz ausgewählt, in welchem für jedes der nach der Ankopplungsstärke korrigierten Schallemissionssensorsignale als Kennzahl das quadratische Mittel (RMS) der nach der korrigierten Fast Fourier Transformation nach

$$RMS = \sqrt{\frac{1}{n} \sum_{i=1}^{n} f_i^2}$$

der Formel berechnet wurde. Anschliessend wurden für die drei Schallemissionssensorsignale die jeweils für den Teilbereich ermittelten Werte der Kennzahl miteinander verglichen. Da die Kennzahl für den Teilbereich des ersten Schallemissionssensorsignals ermittelt einen Wert aufwies, welcher Wert zwischen dem für den Teilbereich des zweiten Schallemissionssensorsignals ermittelten Wert und dem für den Teilbereich des dritten Schallemissionssensorsignals lag, konnte festgestellt werden, dass in diesem Teilbereich eine Quelle Störgeräusche abgibt, welche dem Erstellen der Diagnose des Ventils hinderlich sind. Daher wurde der Teilbereich zu höheren Frequenzen, genauer genommen zum Teilbereich von 100 kHz bis 150 kHz, verschoben. Anschliessend wurden in einem zweiten Schritt in diesem verschobenen Teilbereich wieder für jedes der nach der Ankopplungsstärke korrigierten Schallemissionssensorsignale als Kennzahl das quadratische Mittel (RMS) der nach der korrigierten Fast Fourier

$$RMS = \sqrt{\frac{1}{n} \sum_{i=1}^{n} f_i^2}$$

Transformation nach der Formel berechnet. Da die Kennzahl für diesen verschobenen Teilbereich des ersten Schallemissionssensorsignals ermittelt einen Wert aufwies, welcher Wert nicht zwischen dem für den verschobenen Teilbereich des zweiten Schallemissionssensorsignals ermittelten Wert und dem für den verschobenen Teilbereich des dritten Schallemissionssensorsignals lag, konnte festgestellt werden, dass in diesem Teilbereich nur geringe oder keine Störgeräusche miterfasst wurden, welche dem Erstellen der Diagnose des Ventils hinderlich sind. Vielmehr wurde, da die Kennzahl für den verschobenen Teilbereich des ersten Schallemissionssensorsignals ermittelt einen Wert aufwies, welcher Wert um mindestens einen Grenzwert grösser als der für den Teilbereich des zweiten und des dritten der Schallemissionssensorsignale ermittelte Wert der Kennzahl war, als Diagnose des Bauteils das Bauteil als defekt bzw. das Ventil als leckend diagnostiziert.

In der Figur 6 sind wiederum RMS-Kurven des ersten Schallemissionssensorsignals, des zweiten Schallemissionssensorsignals und des dritten Schallemissionssensorsignals gezeigt, wobei in Figur 5 das Fluid Wasserdampf bei einem Druck oberhalb des Ventils von 7 bar war und die Rohrleitung 200 einen Innendurchmesser von 150 mm aufwies, wobei aber das Ventil ein Durchgangsventil (in Englisch "globe valve") mit einem Ventildurchmesser von 150 mm aufgewiesen hat. Auch hier wurden die Schallemissionssignale an einer Rohrleitung 200 in einem Produktionsbetrieb aufgenommen. Daher konnte die exakte Leckagerate nicht bestimmt werden. Es war jedoch bekannt und konnte mit dem erfindungsgemässen Verfahren bestimmt werden, dass das Ventil ein kleines Leck aufwies. Dabei ist aus den gezeigten Kurven ersichtlich, dass vom Ventil her gesehen in Flussleitrichtung 201 hinter der zweiten Position 52 eine Quelle von Störgeräuschen mit einer Frequenz von etwa 30 kHz bis etwa 160 kHz vorhanden war.

Für das Erstellen der Diagnose wurde sehr ähnlich wie bereits im Zusammenhang mit Figur 5 beschrieben vorgegangen. Da das Fluid Dampf war, wurde jedoch im ersten Schritt wurde der Teilbereich von 200 kHz bis 250 kHz verwendet und die Kennzahl RMS dafür ermittelt und die ermittelten Werte für die verschiedenen Schallemissionssensorsignale miteinander verglichen. Da hier die Kennzahl für den Teilbereich des ersten Schallemissionssensorsignals ermittelt einen Wert aufwies, welcher Wert nicht zwischen dem für den Teilbereich des zweiten Schallemissionssensorsignals ermittelten Wert und dem für den Teilbereich des dritten Schallemissionssensorsignals lag, konnte sichergestellt werden, dass in diesem Teilbereich nur geringe oder keine Störgeräusche miterfasst wurden, welche dem Erstellen der Diagnose des Ventils hinderlich sind. Zudem wurde, da die Kennzahl für den verschobenen Teilbereich des ersten Schallemissionssensorsignals ermittelt einen Wert aufwies, welcher Wert gerade um den Grenzwert grösser als der für den Teilbereich des zweiten und des dritten der Schallemissionssensorsignale ermittelte Wert der Kennzahl war, als Diagnose des Bauteils das Bauteil als defekt bzw. das Ventil als leckend diagnostiziert, wobei aber auch festgestellt wurde, dass das Leck sehr klein war.

Abgesehen vom vorgehend beschriebenen regelbasierten Vorgehen kann im erfindungsgemässen Verfahren zum Erstellen einer Diagnose eines Bauteils die Diagnose des Bauteils auch wie nachfolgend erläutert durch ein Auswerteverfahren gestützt auf überwachtem maschinellem Lernen erstellt werden.

Dabei wird das überwachte maschinelle Lernen durch Trainieren eines Algorithmus mit Trainingsdaten erreicht. Dabei umfassten die Trainingsdaten Trainingsdatensets, wobei jedes Trainingsdatenset für eine Testmessung an einer Rohrleitung 200 steht und zusätzlich zu den jeweiligen zur Testmessung gehörenden Schallemissionssensorsignalen, welche den jeweils an der Rohrleitung 200 erfassten Schallemissionssignalen entsprechen, auch den Zustand des Bauteils, welcher Zustand für die jeweilige Testmessung zu diagnostizieren ist, beinhalten. Dabei kann, wenn das Bauteil ein Ventil ist, der zu diagnostizierende Zustand des Ventil binär sein und den Wert "dicht" oder den Wert "leckend" aufweisen. Der zu diagnostizierende Zustand des Ventils kann aber auch die Leckagerate des Ventils enthalten, wenn das Ventil bei der jeweiligen Testmessung ein Leck aufgewiesen hat. Bei den Trainingsdatensets kann es sich beispielsweise um die in den Figuren 2 bis 6 gezeigten Messungen handeln, wobei die das jeweilige Trainingsdatenset jeweils auch noch weitere Angaben wie die vorgehend genannten Angaben zum Fluid, Druck, der Rohrleitung 200, dem Bauteil 100, aber auch zu den Ankopplungsstärken der Schallemissionssensoren 2.1, 2.2 beim Erfassen der jeweiligen Schallemissionssignale umfassen können. Insbesondere können dabei die an einem Teststand erfassten Schallemissionssignale, wie sie in den Figuren 2, 3 und 4 gezeigt sind, verwendet werden, da dort der Zustand des Bauteils bzw. die Leckagerate des Ventils exakt bestimmt werden und mit in das jeweilige Trainingsdatenset aufgenommen werden kann. Es können aber auch Messungen als Trainingsdatensets verwendet werden, welche wie die in den Figuren 5 und 6 gezeigten Messungen an in Produktionsanlagen stehenden Rohrleitungen 200 aufgenommen wurden. Weiter können für jedes Trainingsdatenset auch die vorgehend beschriebenen ermittelten Werte einer Kennzahl für die vorgehend beschriebenen Teilbereiche mit in das jeweilige Trainingsdatenset aufgenommen werden.

In diesem Fall sind letztlich bei der Durchführung des Verfahrens diese Werte der jeweiligen Kennzahl für den jeweiligen Teilbereich zu ermitteln und dem Algorithmus zum Auswerten für die Diagnose des Bauteils 100 ebenfalls zu übermitteln. Es besteht aber auch die Möglichkeit, dass die Schallemissionssensorsignale nur nach der Korrektur für die Ankopplungsstärke oder auch ohne die Korrektur für die Ankopplungsstärke dem Algorithmus zum Auswerten für die Diagnose des Bauteils 100 übermittelt werden. D.h. es besteht die Möglichkeit, dem Algorithmus die Schallemissionssensorsignale zeitaufgelöst oder frequenzaufgelöst als Fast Fourier Transformation, allenfalls wie vorgehend im Zusammenhang mit Figur 2 beschrieben, als fortlaufenden Quadratisches Mittel zum Auswerten für die Diagnose des Bauteils 100 übermittelt werden. Der Algorithmus sollte aber vorgehend mit in der gleichen Form vorliegenden Trainingsdaten trainiert worden sein.

In einem ersten Ausführungsbeispiel wurde ein Random Forest-Ansatz als Algorithmus für das überwachte maschinelle Lernen verwendet. Beim Random Forest-Ansatz handelt es sich um einen Meta-Schätzer, der eine Reihe von Entscheidungsbaum-Klassifikatoren auf verschiedene Unterstichproben des Datensatzes anpasst und eine Mittelwertbildung verwendet, um die Vorhersagegenauigkeit zu verbessern und die Überanpassung zu kontrollieren. Dabei wurde die Anzahl der Zufallsbäume auf 100 festgelegt und die maximale Tiefe wurde nicht eingeschränkt. Die Mindestanzahl von Stichproben, die für die Aufteilung eines internen Knotens erforderlich ist, wurde auf dem Standardwert von 2 belassen.

Für das Trainieren des Algorithmus wurden Trainingsdaten mit Trainingsdatensets verwendet, welche wie im Zusammenhang mit den Figuren 2 bis 4 beschrieben, an einem Teststand mit einer Testrohrleitung mit einem darin eingebauten Testventil erfasst wurden. Dabei umfassten die Trainingsdaten doppelt so viele Trainingsdatensets zu einem leckenden Testventil wie Trainingsdatensets zu einem dichten Testventil. Für das Trainieren des Algorithmus wurden jeweils darauf geachtet, dass von jeder Klasse mindestens 40 Trainingsdatensets vorhanden waren, um sicherzustellen, dass der trainierte Algorithmus leckende sowie dichte Ventile gut diagnostizieren kann.

Jedes Trainingsdatenset beinhaltete das erste Trainingsschallemissionssensorsignal, das zweite Trainingsschallemissionssensorsignal sowie das dritte Trainingsschallemissionssensorsignal, die jeweilige Ankopplungsstärke des jeweiligen Schallemissionssensors beim Erfassen des jeweiligen entsprechenden Schallemissionssignals, den Ventiltyp des Testventils, die Information, ob das Ventil dicht oder leckend war, und die Information, ob das Fluid Wasser, Dampf oder Luft war. Weiter beinhalteten die Trainingsdatensets Angaben zum Druckabfall über das Testventil und das für Teilbereiche des jeweiligen Testschallemissionssensorsignals ermittelte quadratische Mittel (RMS), wobei als Teilbereiche in Abhängigkeit davon, ob das Fluid Wasser, Dampf oder Gas bzw. Luft war, die vorgehend beschriebenen Teilbereiche aus dem erfassten Frequenzbereich ausgewählt wurden.

Die Testschallemissionssensorsignale wiesen jeweils eine Länge von $2^{16}$ Datenpunkten auf. Die Testschallemissionssensorsignale wurden bezüglich der jeweiligen Ankopplungsstärke korrigiert und ein Hanning-Fenster wurde darauf gelegt, bevor von den Testschallemissionssensorsignalen die Fast Fourier Transformation berechnet wurde. Die Fast Fourier Transformation wurde anschliessend mit einem Gaussfilter mit einer Breite von 100 Datenpunkten geglättet und das Ergebnis in eine logarithmische (dB) Skala umgewandelt. Diese logarithmischen Intensitätskurven und auch der Druckabfall über das Testventil sowie das für die Teilbereiche des jeweiligen Testschallemissionssensorsignals ermittelte quadratische Mittel (RMS) wurden für alle Trainingsdatensets in einen vorgegebenen Wertebereich skaliert, um vergleichbare Magnituden zu erhalten.

Insgesamt 100 mal wurde das Klassierungsmodell durchgespielt und das beste Ergebnis wurde ausgewählt. Dabei erfolgte die Wahl basierend darauf, dass das Klassierungsmodell besser als eine anfänglich vorgegebene Minimalbewertung der Genauigkeit, Präzision, True Positives, True Negatives und False Negatives sein musste. Das ausgewählte beste Klassierungsmodell wurde anschliessend für die Durchführung des erfindungsgemässen Verfahrens verwendet.

Im Ergebnis konnte mit dem Random Forest-Ansatz als Algorithmus für das überwachte maschinelle Lernen mit dem erfindungsgemässen Verfahren die Diagnose eines Ventils, d.h. ob das Ventil dicht oder leckend war, mit einer Genauigkeit von über 90%, mit einer Präzision von über 90% und einer Trefferquote von über 90% richtig erstellt werden.

In einem zweiten Ausführungsbeispiel wurde ein individuell angepasster Neuraler Netzwerk (custom-designed Neural Network)-Ansatz als Algorithmus für das überwachte maschinelle Lernen verwendet. Bei einem individuell angepassten Neuralen Netzwerk wird ein Fenster über das Signal bewegt und relevante Merkmale werden auf verschiedenen Ebenen (von niedrig bis hoch) identifiziert. Diese Merkmale werden automatisch identifiziert, ohne dass im Voraus bekannt ist, welche Merkmale dies letztlich sind. Der individuell angepasste Neurale Netzwerk (custom-designed Neural Network)-Ansatz ermöglicht es, Wechselbeziehung zwischen den Merkmalen beizubehalten. Die endgültige Architektur bestand im vorliegenden Ausführungsbeispiel aus 3 Faltungsschichten (convolutional layers) zur Extraktion von Mustern, gefolgt von drei Dichteentscheidungsschichten (dense decision layers). Als Verlustfunktion wurde eine binäre Kreuzentropie gewählt, da das Modell letztlich die binäre Frage bzw. binäre Klassifizierungsaufgabe lösen sollte, ob das Ventil ein Leck aufweist oder nicht. Um die Lernrate zu optimieren und das Ergebnis zu verbessern, wurde ausserdem ein LookAhead-Mechanismus verwendet, da dieser das Modell weniger empfindlich gegenüber suboptimalen Hyperparametern macht und somit die Notwendigkeit einer umfangreichen Hyperparameter-Abstimmung verringert. Dabei wurde der LookAhead-Mechanismus in Kombination mit RectifiedAdam verwendet, welcher leistungsfähigste Optimierer für das Modell war.

Im zweiten Ausführungsbeispiel mit dem individuell angepassten Neuralen Netzwerk (custom-designed Neural Network)-Ansatz wurden für das Trainieren des Algorithmus ähnliche Trainingsdaten wie zum Trainieren des Algorithmus im ersten Ausführungsbeispiel mit dem Random Forest-Ansatz verwendet. Allerdings wurden im zweiten Ausführungsbeispiel mit dem individuell angepassten Neuralen Netzwerk (custom-designed Neural Network)-Ansatz die Fast Fourier Transformation der Trainingsschallemissionssensorsignale dreimal hintereinander mit einem Gaussfilter mit einer Breite von 100 Datenpunkten geglättet und das Ergebnis wurde anschliessend in der x-Achse quadratisch verzerrt, um die bei tieferen Frequenzen bedeutenderen Merkmale zu verstärken.

Im Ergebnis konnte mit dem individuell angepassten Neuralen Netzwerk (custom-designed Neural Network)-Ansatz als Algorithmus für das überwachte maschinelle Lernen mit dem erfindungsgemässen Verfahren die Diagnose eines Ventils, d.h. ob das Ventil dicht oder leckend war, mit einer Genauigkeit von über 90%, mit einer Präzision von über 90% und einer Trefferquote von über 90% richtig erstellt werden.

Die Erfindung ist nicht auf die vorgehend erläuterten Ausführungsbeispiele beschränkt. Wenn im Verfahren zum Erstellen einer Diagnose eines Bauteils die Diagnose des Bauteils durch ein Auswerteverfahren gestützt auf überwachtem maschinellem Lernen erstellt wird, so können auch weitere vorgehend nicht beschriebene Merkmale zum Trainieren des Algorithmus verwendet werden. Beispielsweise kann die Wölbung (in Englisch "kurtosis") der Schallemissionssensorsignale als Merkmal verwendet werden. Weiter kann (in English "Skewness") der Schallemissionssensorsignale als Merkmal verwendet werden. Auch kann die Energie der Schallemissionssensorsignale, welche Energie die Fläche unterhalb der Kurve des Quadrats des Absolutbetrags des jeweiligen Schallemissionssensorsignals ist, als Merkmal verwendet werden. Auch kann die Standardabweichung der Schallemissionssensorsignale als Merkmal verwendet werden. Weiter können die Histogramme der vom jeweiligen Schallemissionssensor ausgegebenen Spannungen, welche den ausgegebenen Schallemissionssensorsignalen entsprechen, als Merkmal verwendet werden. Auch können Nulldurchgänge der Schallemissionssensorsignale als Indikator für das im jeweiligen Schallemissionssensorsignal vorhandene Signalrauschen als Merkmal verhindert werden. Ausserdem können die Spektralschwerpunkte der Schallemissionssensorsignale als Merkmal verwendet werden. Die Spektralschwerpunkte geben an, wo sich der Massenschwerpunkt des jeweiligen Schallemissionssensorsignals befindet. Er wird als gewichteter Mittelwert der im jeweiligen Schallemissionssensorsignal vorhandenen Frequenzen berechnet, wobei die Gewichte durch die Werte der Fast Fourier Transformation bei den jeweiligen Frequenzen gebildet werden. Weiter kann auch das Verhältnis des Signals zum Rauschen als Merkmal verwendet werden. Weiter kann in den Trainingsdaten den Schallemissionssensorsignalen auch ein additives weisses Gaußsches Rauschen hinzugefügt werden, um eine Überanpassung des Modells zu verhindern.

Zusammenfassend ist festzustellen, dass ein dem eingangs genannten technischen Gebiet zugehörendes Verfahren zum Erstellen einer Diagnose eines Bauteils, insbesondere eines Ventils, welches Bauteil eingebaut ist in eine Rohrleitung, welche Rohrleitung zum Leiten eines Fluids entlang einem Flussweg in eine Flussleitrichtung ausgebildet ist, mittels Schallemissionsprüfung geschaffen wird, welches Verfahren das Erstellen einer genaueren und zuverlässigeren Diagnose des Bauteils ermöglicht. Weiter wird ein Computerprogrammprodukt zur Durchführung dieses Verfahrens zu schaffen, welches das Erstellen einer genaueren und zuverlässigeren Diagnose des Bauteils ermöglicht. Ausserdem wird ein Verfahren zur Diagnose eines Bauteils, insbesondere eines Ventils, welches Bauteil eingebaut ist in eine Rohrleitung, welche Rohrleitung zum Leiten eines Fluids entlang einem Flussweg in eine Flussleitrichtung ausgebildet ist, mittels Schallemissionsprüfung zu schaffen und eine Anordnung zur Durchführung des Verfahren zur Diagnose des Bauteils, insbesondere Ventils, mittels Schallemissionsprüfung geschaffen, welches eine genauere und zuverlässigere Diagnose des Ventils ermöglichen.

**Patentansprüche**

1. Ein Verfahren zum Erstellen einer Diagnose eines Bauteils (100), insbesondere eines Ventils, mittels Schallemissionsprüfung, welches Bauteil (100) eingebaut ist in eine Rohrleitung (200), welche Rohrleitung (200) zum Leiten eines Fluids entlang einem Flussweg in eine Flussleitrichtung (201) ausgebildet ist, wobei die Diagnose des Bauteils (100) unter Berücksichtigung eines ersten Schallemissionssensorsignals und eines zweiten Schallemissionssensorsignals erstellt wird, wobei für das Erstellen der Diagnose ein Unterscheidungsmerkmal zwischen dem ersten Schallemissionssensorsignal und dem zweiten Schallemissionssensorsignal mitberücksichtigt wird,

   a) wobei das erste Schallemissionssensorsignal von einem von wenigstens einem Schallemissionssensor (2.1, 2.2) ausgegeben worden ist, wobei mit dem jeweiligen vom wenigstens einen Schallemissionssensor (2.1, 2.2) an einer ersten Position (51) auf der Rohrleitung ein erstes Schallemissionssignal erfasst worden ist, wobei das vom jeweiligen vom wenigstens einen Schallemissionssensor (2.1, 2.2) ausgegebene erste Schallemissionssensorsignal dem erfassten ersten Schallemissionssignal entspricht, wobei sich die erste Position (51) in die Flussleitrichtung (201) gesehen auf einer Höhe des in die Rohrleitung (200) eingebauten Bauteils (100) befindet,
   b) wobei das zweite Schallemissionssensorsignal von einem vom wenigstens einen Schallemissionssensor (2.1, 2.2) ausgegeben worden ist, wobei mit dem jeweiligen vom wenigstens einen Schallemissionssensor (2.1, 2.2) an einer zweiten Position (52) auf der Rohrleitung (200) ein zweites Schallemissionssignal erfasst worden ist, wobei das vom jeweiligen vom wenigstens einen Schallemissionssensor (2.1, 2.2) ausgegebene zweite Schallemissionssensorsignal dem erfassten zweiten Schallemissionssignal entspricht, wobei sich die zweite Position (52) von der ersten Position (51) in die Flussleitrichtung (201) oder entgegen der Flussleitrichtung (201) von der ersten Position (51) beabstandet auf der Rohrleitung (200) befindet.

2. Das Verfahren nach Anspruch 1, **dadurch gekennzeichnet, dass** die Diagnose des Bauteils (100) unter Berücksichtigung eines dritten Schallemissionssensorsignals erstellt wird, wobei das dritte Schallemissionssensorsignal von einem vom wenigstens einen Schallemissionssensor (2.1, 2.2) ausgegeben worden ist, wobei mit dem jeweiligen von wenigstens einem Schallemissionssensor (2.1, 2.2) an einer dritten Position (53) auf der Rohrleitung (200) ein drittes Schallemissionssignal erfasst worden ist, wobei das vom jeweiligen vom wenigstens einen Schallemissionssensor (2.1, 2.2) ausgegebene dritte Schallemissionssensorsignal dem erfassten dritten Schallemissionssignal entspricht.

3. Das Verfahren nach Anspruch 2, **dadurch gekennzeichnet, dass** sich entlang dem Flussweg betrachtet die dritte Position (53) auf einer anderen Seite von der ersten Position (51) befindet als sich die zweite Position (52) von der ersten Position (51) befindet, womit sich die erste Position (51) entlang dem Flussweg betrachtet zwischen der zweiten Position (52) und der dritten Position (53) befindet, wobei für das Erstellen der Diagnose ein Unterscheidungsmerkmal zwischen dem ersten Schallemissionssensorsignal und dem dritten Schallemissionssensorsignals mitberücksichtigt wird.

4. Das Verfahren nach einem der Ansprüche 1 bis 3, **dadurch gekennzeichnet, dass** die mit dem wenigstens einen Schallemissionssensor (2.1, 2.2), insbesondere mit jedem des wenigstens einen Schallemissionssensors (2.1, 2.2), erfassten Schallemissionssignale über einen Frequenzbereich von etwa 1 kHz bis etwa 1 MHz, bevorzugt von 1 kHz bis 1 MHz, besonders bevorzugt von 25 kHz bis 500 kHz, ganz besonders bevorzugt von 25 kHz bis 300 kHz erfasst werden.

5. Das Verfahren nach einem der Ansprüche 1 bis 4, **dadurch gekennzeichnet, dass** für das Erstellen der Diagnose des Bauteils (100) ein Aggregatszustand des Fluids und/oder ein Medium des Fluids mitberücksichtigt wird.

6. Das Verfahren nach einem der Ansprüche 1 bis 5, **dadurch gekennzeichnet, dass** für das Erstellen der Diagnose des Bauteils (100) ein Druckunterschied, insbesondere Druckabfall, in der Rohrleitung (200) über das in die Rohrleitung (200) eingebaute Bauteil (100) mitberücksichtigt wird.

7. Das Verfahren nach einem der Ansprüche 4 bis 6, **dadurch gekennzeichnet, dass** für das Erstellen der Diagnose des Bauteils (100) die Schallemissionssensorsignale über einen Teilbereich des Frequenzbereichs, über welchen Frequenzbereich die Schallemissionssignale erfasst werden, ausgewertet werden.

8. Das Verfahren nach Anspruch 7 **dadurch gekennzeichnet, dass** für das Erstellen der Diagnose des Bauteils (100) die Schallemissionssensorsignale über den Teilbereich des Frequenzbereichs, über welchen Frequenzbereich die Schallemissionssignale erfasst werden, ausgewertet werden, indem für diesen Teilbereich mindestens eine Kennzahl des jeweiligen Schallemissionssensorsignals ermittelt wird.

9. Das Verfahren nach Anspruch 2 und 8, **dadurch gekennzeichnet, dass** die Diagnose des Bauteils (100) unter Berücksichtigung des ersten Schallemissionssensorsignals sowie mindestens zwei weiterer der Schallemissionssensorsignale erstellt wird, wobei sich die erste Position (51) entlang dem Flussweg betrachtet zwischen den beiden Positionen (52, 53, 54, 55) befindet, an welchen zwei der mindestens zwei weiteren der Schallemissionssignale erfasst worden sind,
wobei, wenn für eine der mindestens einen Kennzahl eine Bedingung erfüllt ist, wonach die eine der mindestens einen Kennzahl für den Teilbereich des ersten Schallemissionssensorsignals ermittelt einen Wert aufweist, welcher Wert zwischen dem für den Teilbereich des einen der zwei der mindestens zwei weiteren der Schallemissionssensorsignale ermittelten Wert und dem für den Teilbereich des anderen der zwei der mindestens zwei weiteren der Schallemissionssensorsignale ermittelten Wert liegt, der Teilbereich innerhalb des Frequenzbereichs, über welchen Frequenzbereich die Schallemissionssignale erfasst werden, zu höheren Frequenzen verschoben wird und für das Erstellen der Diagnose des Bauteils (100) die Schallemissionssensorsignale über den verschobenen Teilbereich des Frequenzbereichs, über welchen Frequenzbereich die Schallemissionssignale erfasst werden, ausgewertet werden, indem für diesen verschobenen Teilbereich die mindestens eine Kennzahl des jeweiligen Schallemissionssensorsignals ermittelt wird.

10. Das Verfahren nach Anspruch 8 oder 9, **dadurch gekennzeichnet, dass** die Diagnose des Bauteils (100) unter Berücksichtigung des ersten Schallemissionssensorsignals sowie mindestens eines weiteren der Schallemissionssensorsignale erstellt wird, wobei, wenn für eine der mindestens einen Kennzahl eine Bedingung erfüllt ist, wonach die eine der mindestens einen Kennzahl für den Teilbereich des ersten Schallemissionssensorsignals ermittelt einen Wert aufweist, welcher Wert um mindestens einen Grenzwert grösser als der für den Teilbereich des mindestens einen weiteren der Schallemissionssensorsignale ermittelte Wert ist, als Diagnose des Bauteils (100) das Bauteil (100) als defekt diagnostiziert wird.

11. Das Verfahren nach einem der Ansprüche 1 bis 10, **dadurch gekennzeichnet, dass** die Diagnose des Bauteils (100) durch ein Auswerteverfahren gestützt auf überwachtem maschinellem Lernen erstellt wird.

12. Ein Computerprogrammprodukt (5) zur Durchführung des Verfahrens nach einem der Ansprüche 1 bis 11.

13. Ein Verfahren zur Diagnose eines Bauteils (100), insbesondere eines Ventils, mittels Schallemissionsprüfung, welches Bauteil (100) eingebaut ist in eine Rohrleitung (200), welche Rohrleitung (200) zum Leiten eines Fluids entlang einem Flussweg in eine Flussleitrichtung (201) ausgebildet ist,

a) wobei mit einem von wenigstens einem Schallemissionssensor (2.1, 2.2) an einer ersten Position (51) auf der Rohrleitung (200) das erste Schallemissionssignal erfasst wird und von demjenigen des wenigstens einen Schallemissionssensors (2.1, 2.2), mit welchem an der ersten Position (51) auf der Rohrleitung (200) das erste Schallemissionssignal erfasst wird, das dem erfassten ersten Schallemissionssignal entsprechende erste Schallemissionssensorsignal ausgegeben wird,
b) wobei mit einem des wenigstens einen Schallemissionssensors (2.1, 2.2) an einer zweiten Position (52) auf der Rohrleitung (200) das zweite Schallemissionssignal erfasst wird und von demjenigen des wenigstens einen Schallemissionssensors (2.1, 2.2), mit welchem an der zweiten Position (52) auf der Rohrleitung (200) das zweite Schallemissionssignal erfasst wird, das dem zweiten Schallemissionssignal entsprechende zweite Schallemissionssensorsignal ausgegeben wird,

wobei das erste Schallemissionssensorsignal an ein mit demjenigen des wenigstens einen Schallemissionssensors (2.1, 2.2), mit welchem das erste Schallemissionssignal erfasst worden ist, verbundenes Diagnosemodul (4) für das Erstellen der Diagnose des Bauteils (100) übermittelt wird und das zweite Schallemissionssensorsignal an das mit demjenigen des wenigstens einen Schallemissionssensors (2.1, 2.2), mit welchem das zweite Schallemissionssignal erfasst worden ist, verbundene Diagnosemodul (4) für das Erstellen der Diagnose des Bauteils (100) übermittelt wird und mittels dem Diagnosemodul unter Berücksichtigung des ersten Schallemissionssensorsignals und des zweiten Schallemissionssensorsignals die Diagnose des Bauteils (100) mit dem Verfahren nach einem der Ansprüche 1 bis 11 erstellt wird.

14. Das Verfahren nach Anspruch 13, **dadurch gekennzeichnet, dass** mit einem des wenigstens einen Schallemissionssensors (2.1, 2.2) an der dritten Position (53) auf der Rohrleitung (200) das dritte Schallemissionssignal erfasst wird und von demjenigen des wenigstens einen Schallemissionssensors (2.1, 2.2), mit welchem an der dritten Position (53) auf der Rohrleitung (200) das dritte Schallemissionssignal erfasst wird, das dem dritten Schallemissionssignal entsprechende dritte Schallemissionssensorsignal ausgegeben wird, wobei das dritte Schallemissionssensorsignal an das mit demjenigen des wenigstens einen Schallemissionssensors (2.1, 2.2), mit welchem das dritte Schallemissionssignal erfasst worden ist, verbundene Diagnosemodul (4) für das Erstellen der Diagnose des Bauteils (100) übermittelt wird und mittels dem Diagnosemodul die Diagnose des Bauteils (100) unter zusätzlicher Berücksichtigung des dritten Schallemissionssensorsignals mit dem Verfahren nach einem der Ansprüche 2 bis 11 erstellt wird.

15. Anordnung (1) zur Durchführung des Verfahrens nach 13 oder 14, umfassend

    a) wenigstens einen Schallemissionssensor (2.1, 2.2) zum Erfassen eines ersten Schallemissionssignals an einer ersten Position (51) auf einer Rohrleitung (200) und Ausgeben eines ersten Schallemissionssensorsignals, wobei das erste Schallemissionssensorsignal dem erfassten ersten Schallemissionssignal entspricht, zum Erfassen eines zweiten Schallemissionssignals an einer zweiten Position (52) auf der Rohrleitung (200) und Ausgeben eines zweiten Schallemissionssensorsignals, wobei das zweite Schallemissionssensorsignal dem erfassten zweiten Schallemissionssignal entspricht, und

    b) eine Diagnoseeinheit (3) mit dem Diagnosemodul (4) für das Erstellen der Diagnose des Bauteils (100) unter Berücksichtigung des ersten Schallemissionssensorsignals und des zweiten Schallemissionssensorsignals die Diagnose des Bauteils (100) mit dem Verfahren nach einem der Ansprüche 1 bis 12, wobei die Diagnoseeinheit (3) mit dem Diagnosemodul (4) zum Empfangen des ersten Schallemissionssensorsignals mit demjenigen des wenigstens einen Schallemissionssensors (2.1, 2.2) verbunden ist, mit welchem das erste Schallemissionssignal zu erfassen ist, und zum Empfangen des zweiten Schallemissionssensorsignals mit demjenigen des wenigstens einen Schallemissionssensors (2.1, 2.2) verbunden ist, mit welchem das zweite Schallemissionssignal zu erfassen ist.

**Fig. 1**

Wasser bei 40 bar, kein Leck

**Fig. 2**

Wasser bei 40 bar, Leck mit Leckrate von 0.16 l/min

Fig. 3

Gas bei 32 bar, Leck mit Leckrate von 0.18 l/min

Fig. 4

Wasser bei 5 bar, sehr grosses Leck

Fig. 5

Wasserdampf bei 7 bar, sehr kleines Leck

Fig. 6

**EUROPÄISCHER RECHERCHENBERICHT**

Nummer der Anmeldung

EP 22 15 4015

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 650 943 A (POWELL LLOYD E [US] ET AL) 22. Juli 1997 (1997-07-22) | 1-4, 7-10, 12-15 | INV. F16K37/00 F16K51/00 |
| Y | * Zusammenfassung * * Spalte 4, Zeilen 1-18, 62-64 * * Spalte 5, Zeilen 28-30 * * Spalte 7, Zeile 66 - Spalte 8, Zeile 8 * * Spalte 11, Zeile 53 - Spalte 12, Zeile 10 * * Spalte 24, Zeilen 42-49 * * Spalte 25, Zeilen 51-53 * ----- | 5,6,11 | F16L55/00 F17D5/06 G01M3/24 G01N29/04 G01N29/44 |
| X | CN 204 042 457 U (PETROCHINA CO LTD) 24. Dezember 2014 (2014-12-24) | 1-4, 7-10, 13-15 | |
| Y | * das ganze Dokument * ----- | 5,6,11 | |
| X | CN 201 740 632 U (UNIV CHANGSHA SCIENCE) 9. Februar 2011 (2011-02-09) | 1-4, 7-10, 12-15 | |
| Y | * das ganze Dokument * ----- | 5,6,11 | RECHERCHIERTE SACHGEBIETE (IPC) |
| X | LIN WEIGUO ET AL: "Research on non-intrusive acoustic monitoring for valve internal leakage", 2017 29TH CHINESE CONTROL AND DECISION CONFERENCE (CCDC), IEEE, 28. Mai 2017 (2017-05-28), Seiten 7796-7801, XP033120630, DOI: 10.1109/CCDC.2017.7978608 [gefunden am 2017-07-12] | 1-4, 7-10, 12-15 | G01M F16L F16K F17D G01N |
| Y | * Seite 7797, rechte Spalte - Seite 7798, linke Spalte * * Seite 7799; Tabelle 2 * * Seite 7801, Absatz 6.1) * ----- | 5,6,11 | |

-/--

Der vorliegende Recherchenbericht wurde für alle Patentansprüche erstellt

| Recherchenort | Abschlußdatum der Recherche | Prüfer |
|---|---|---|
| München | 10. Juni 2022 | Filipas, Alin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 22 15 4015

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | KAEWWAEWNOI W ET AL: "Investigation of the relationship between internal fluid leakage through a valve and the acoustic emission generated from the leakage", MEASUREMENT, INSTITUTE OF MEASUREMENT AND CONTROL. LONDON, GB, Bd. 43, Nr. 2, 1. Februar 2010 (2010-02-01), Seiten 274-282, XP026801551, ISSN: 0263-2241 [gefunden am 2009-10-17] * Absatz [4.Results...] * ----- | 5,6 | |
| Y | BANJARA NAWAL KISHOR ET AL: "Machine learning supported acoustic emission technique for leakage detection in pipelines", INTERNATIONAL JOURNAL OF PRESSURE VESSELS AND PIPING, ELSEVIER SCIENCE PUBLISHERS, BARKING, GB, Bd. 188, 31. Oktober 2020 (2020-10-31), XP086392609, ISSN: 0308-0161, DOI: 10.1016/J.IJPVP.2020.104243 [gefunden am 2020-10-31] * Absatz [3.Extraction...] - Absatz [4.Machine...] * ----- | 11 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 10. Juni 2022 | Filipas, Alin |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 22 15 4015**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**10-06-2022**

| Im Recherchenbericht angeführtes Patentdokument | Datum der Veröffentlichung | Mitglied(er) der Patentfamilie | Datum der Veröffentlichung |
|---|---|---|---|
| US 5650943 A | 22-07-1997 | KEINE | |
| CN 204042457 U | 24-12-2014 | KEINE | |
| CN 201740632 U | 09-02-2011 | KEINE | |

EPO FORM P0461

Für nähere Einzelheiten zu diesem Anhang : siehe Amtsblatt des Europäischen Patentamts, Nr.12/82

**EP 4 219 993 A1**

**IN DER BESCHREIBUNG AUFGEFÜHRTE DOKUMENTE**

**In der Beschreibung aufgeführte Patentdokumente**

- WO 2014105839 A1